# EUROPEAN PATENT SPECIFICATION

(11) **EP 2 834 197 B1**
(45) Date of publication and mention of the grant of the patent: **10.10.2018**
(21) Application number: 13729404.7
(22) Date of filing: 27.03.2013
(51) Int. Cl.: C02F 1/78, C02F 1/32, C02F 1/463, C02F 1/465, C02F 1/467, C02F 1/36, C02F 1/00, C02F 1/28, C02F 1/48, C02F 1/52, C02F 9/00, B01D 21/00

(54) **PROCESS AND DEVICE FOR ELECTROCHEMICAL TREATMENT OF INDUSTRIAL WASTEWATER AND DRINKING WATER**
VERFAHREN UND VORRICHTUNG ZUR ELEKTROCHEMISCHEN BEHANDLUNG VON INDUSTRIEABWASSER UND TRINKWASSER
PROCÉDÉ ET DISPOSITIF DE TRAITEMENT ÉLECTROCHIMIQUE DES EAUX USÉES INDUSTRIELLES ET DE L'EAU POTABLE

(30) Priority: 28.03.2012 HR P20120276
(43) Date of publication of application: 11.02.2015
(73) Proprietor: Visnja, Orescanin, 10000 Zagreb (HR); Nenad, Mikulic, 10000 Zagreb (HR); Denis, Petljak, 10362 Kasina Prekvrsje (HR)
(72) Inventor: Visnja, Orescanin, 10000 Zagreb (HR); Nenad, Mikulic, 10000 Zagreb (HR); Denis, Petljak, 10362 Kasina Prekvrsje (HR)
(74) Representative: Sloboshanin, Sergej
(86) International application number: PCT/HR2013/000004
(87) International publication number: WO 2013/144664

(56) References cited:
- EP-A1- 1 138 635
- EP-A1- 1 234 802
- EP-B1- 1 017 633
- WO-A1-99/26887
- US-A- 3 664 951
- US-A1- 2003 183 516
- US-A1- 2005 194 263
- US-A1- 2009 008 267

## Description

### Technical Field

This invention is related to procedure and device for treatment of industrial waste water by electrochemical methods. According to the international patent classification (IPC), the device is classified as: C02F 1/46 - electrochemical methods; namely C02F 1/463 electrocoagulation; C02F 1/465 electroflotation; C02F 1/467 electrochemical disinfection; C02F 1/32 ultraviolet light; C02F 1/36 ultrasonic vibrations; C02F 1/48 magnetic or electric fields; C02F 1/52 chemical or physical water treatment by flocculation or suspended contaminants sedimentation; C02F 1/78 ozone oxidation.

Electrochemical treatment of industrial waste water is a technical problem solved by various procedures and devices. This solution describes an industrial wastewater treatment plant which uses electrochemical methods, namely electrocoagulation, electroflotation, electrochemical disinfection, UV disinfection, magnetic and ultrasonic treatment, as well as flocculation and suspended contamination sedimentation. Wastewater undergoes electrochemical treatment in reactor vessel. Action of reactor electrode set and ozone create conditions for oxidation of organic matter and parallelly set off coagulation/flocculation of suspended and dissolved impurities, which particularly refers to heavy metals in waste water. Treated water is discharged into a separator tank where through subsequent sedimentation on the bottom, the floccule of contamination are separated, while the treated water without impurities and heavy metals is located in the upper part above the sediment and may be discharged into the designated recipients.

### Background of the invention

Numerous applications of various industrial processes in production, as well as many industrial activities generate large quantities of technological wastewater with high concentration of heavy metals and other hazardous inorganic and organic substances. Before being discharged into the designated recipient, wastewater needs to be treated with heavy metal and other contaminant removal procedures in order to achieve legally required concentrations for discharge into the natural recipient or public sewer system.

Most devices used in practice for elimination of heavy metals from wastewater use dangerous and aggressive chemical substances such as acids and bases during their operation. The most frequently used coagulation/flocculation procedure uses adequate liquid coagulant (Al₂(SO₄)₃, FeCl₃, Fe₂(SO₄)₃, polyaluminum hydroxychloride), and additional electrolyte (bentonite, silica, polyacrylamide) under strictly controlled pH conditions. The best results are achieved in range between pH=7 and pH=8. The coagulant cause's generation of crystallization seeds, and due to its high molecular mass, the additional electrolyte causes aggregation of particles into larger clusters and their gravitational sedimentation. Due to hydrolysis, the addition of coagulant (iron and aluminium salts) significantly decreases pH value, especially in case of low alkalinity water. With pH decrease, most metal solubility increases, so the coagulation/flocculation efficiency is also decreased because of which the wastewater treatment plants need have a pH meter and a titrator for the purposes of adjustment and maintenance of optimum pH value. In order for crystallization seeds to occur, water needs to be subject to fast mixing (200 rounds per minute). After the application of polyelectrolyte, mixing needs to be slowed to maximum 30 rounds per minute in order not to damage the floccule structure and consequently reduce efficacy of element removal from waste water.

Other group of industrial wastewater treatment devices using coagulation/flocculation do not use aggressive and hazardous chemical substances such as acids and bases. One of the examples is an industrial wastewater treatment plant by Kukec Leander et al. (Croatian patent PK20010753 issued on 30 April 2003). Such devices use a specially prepared pH neutral gelatinous flocculant. They are characteristic for being significantly simplified in technical terms in relation to the previously mentioned device group of the same type and purpose, without control pH meters and dosators. Gelatinous flocculant is during waste water treatment procedure gradually mixed in certain dose, and during the mixing process binds to itself contamination and heavy metals through the flocculation process. By subsequent sedimentation in the sedimentation tank, impure part of water is separated on the bottom from the clean water. Treated water without contamination and heavy metals is located in the upper part of tank above the sediment, and may be discharged into the designated recipients.

The patent by the inventor Arona Mikhailovich K. et al. (U.S. Pat. No. 6,887,368 issued on 3 May 2005) describes the procedure and device for electrical separation of heavy metals from technological solutions and wastewater. Working medium undergoes pre - treatment with the purpose to separate or reduce concentration of chromium-6 and high concentrations of heavy metals using three-phase alternating current and application of specially designed electrodes. The preparatory phase in the existing invention, i.e. the working medium pre-treatment phase implies only the separation of coarser contamination particles from the medium through sedimentation. The existing invention conducts separation of heavy metals, notwithstanding the concentration level, in the first and second reaction phase by electrochemical methods. In the first reactor vessel, electrolysis of water is made with reactor electrode set made of inox, followed by electroflotation, oxidation, ozonation, disinfection with UV lamps, electromagnetic and ultrasonic treatment. In the second reactor vessel, electrolysis is performed alternatingly first with the steel reactor electrode set, then with aluminium reactor electrode set, followed by electroflotation, oxidation, ozonation, disinfection with UV lams, electromagnetic and ultrasonic treatment. Treated water from the second reactor vessel is released into separator tanks where sediment is being separated from the purified water. Moreover, treated water from the separator tanks is lead either to the conditioning vessel or the filter vessel. The procedure is run automatically. Electrodes used by the existing invention are simple metal plates alternatingly connected to positive, i.e. negative pole in direct current field. The stated invention mixes the medium in reactor vessel by means of compressed air, while in the existing invention it is made in lesser degree by streaming of gas bubbles generated on the electrode plate surface which are lifted towards the surface by action of buoyancy, and mostly by pumped-in ozone released on the bottom of reactor vessel in form of small bubbles.

The patent of the inventor Armstrong Louis B. (U.S. Pat. No. 3,664,951 issued on 23 May 1972) describes the device and procedure for treatment of wastewater comprising organic waste components. In the preparatory phase, the initial pH value and electric resistance of working medium are controlled, and the values are adjusted by adding acids and bases. Electrolysis removes bacteria, viruses, and other organic compounds. Further oxidation removes remaining bacteria, odour and residual organic matter. After the treatment, water may be discharged into the recipient. In comparison, the existing invention in the preparatory phase does not require constant control of input values of pH and electric resistance of the working media, or subsequent adjustment to designed operating values. The existing solution in the phase of preliminary preparation of working medium does not use either acids or bases, nor does it use them later in the working medium treatment procedure, or in any other phase of subsequent treatment. PH or water resistance are not measured directly. Regulation of said parameters is made indirectly by controlling electrical power consumption in the operating cycle. The existing solution uses the same reactor vessel for electrolysis, electroflotation, oxidation, ozonation, UV disinfection, magnetic and ultrasonic treatment. After the additional filtering, treated water may be discharged into the recipient.

The process and device for electrocoagulation treatment of industrial wastewater is presented in patent by inventor Morkovsky Paul E. et al. (WO 9926887 issued on 3 June1999). The phases of therein described process are as follows (a) low-pressure supply of industrial water containing contaminants with tendency to flocculate and sediment during wastewater electrolysis between the electrodes in electrocoagulation cell designed for long-term use and easy maintenance; (b) wastewater electrolysis by application of direct current so that present contaminants are destroyed and chemically changed from dissolved state to suspension in electrolysed water forming floccule that are sedimented on the bottom; (c) separation of floccule and treated water with addition of chemical additives for flocculation, if required, and mechanical purification device designed so that it operates more efficiently, simpler and with easier maintenance in comparison with conventional purifiers. Moreover, the wastewater treatment device being patented consists of the following parts: pump for pumping wastewater through electrocoagulation cell, electrocoagulation cell; foam reduction tank for reducing quantity of bubbles in treated water; purifier containing chamber for floccule preparation, series of horizontally arranged imbedded plates of various lengths designed to follow the outline of the purifier exterior wall with shallowly set surface inlet and stepped outlet which ends in the outlet sluice gate; filter presses for compressing flocculated waste material. Further on, electrocoagulation cells is described with available steel electrode plates placed paralelly one towards another at fixed distance and fixed with bearing brackets to the left and right side of the cell wall. The alternative design includes plates made of other materials, such as aluminum, carbon etc. depending on the level of contamination to be treated. In the cell casing, the plates form a winding path for wastewater leading from cell inlet to its outlet. Supply in the cell is applied to every 11th plate. The description of the treatment device includes three main areas where electrocoagulation takes place. First there is chamber for mixing floccule, then the main body of the treatment device and finally, the outlet sluice. The coarse material sedimented on the bottom of the main casing, is sent to be filtered in the machine filter press by the device operator. Comparing the presented patent solution with the existing solution, it is evident that the wastewater treatment phases differ significantly from the described patent as follows: (a) preparation of waste water is made by sedimentation in reception tank; (b) reaction in the first reactor vessel, such as electrocoagulation caused by application of direct current to inox reactor electrode set, electrical oxidation, electroflotation, disinfection with ozone and UV radiation with simultaneous mixing and passage through electromagnet and ultrasonic treatment; (c) reactions in the second reactor vessel such as electrocoagulation caused by application of direct current first on steel reactor electrode set, and after that to aluminium reactor electrode set as well, electrooxidation, electroflotation, disinfection with ozone and UV irradiation with simultaneous mixing and passage through electromagnet and ultrasonic treatment; (d) coagulation and flocculation phase; (e) separation and sedimentation phase with separation of sediment into the sediment collecting tank; (f) filtering of treated water through the sand and activated carbon filters, after which the treated water is discharged into the recipient; (g) oxidation phase by ultraviolet irradiation and ozone treatment, after which the treated water is discharged into the recipient. The existing solution does not use filter press machine and during the treatment procedure, no acids or bases are added for enhancing flocculation. Moreover, by comparing the design of the waste water treatment device, we hereby state that the existing solution comprises: water preparation tank equipped with water pump, level regulator, exhaust valve for discharging collected sediment from the tank, electromagnetic valve, and circulating water pump for pumping pre-treated water into first reactor vessel; first reactor vessel equipped with set of the reactor electrode set made of inox, level regulator, exhaust fan, suction fan, thermometer, circulating water pump, electromagnet, ultraviolet lamp, ultrasonic unit, dispersion shower, electromagnetic valve for supply of clean rinsing water, electromagnetic valve for insertion of ozone through perforated plastic pipe on the reactor vessel bottom, circulating water pump and electromagnetic valve for re-pumping the treated water into second reactor vessel, second reactor vessel equipped with steel reactor electrode set, aluminium reactor electrode set, level regulator, exhaust fan, suction fan, thermometer, vessel rinsing shower, circulating water pump, electromagnet, ultraviolet lamp, ultrasonic unit, dispersion shower, electromagnetic valve for supply of clean rinsing water, electromagnetic valve for insertion of ozone through perforated plastic pipe on the reactor vessel bottom, circulating water pump and electromagnetic valve for discharging the treated water into the first available separator tank; ozone generator equipped with pump for pumping ozone into reactor vessel and conditioning vessel; two separator tanks equipped with level regulator, electromagnetic valves for supply of water, electromagnetic valves for discharge of treated water, electromagnetic valves for supplying clean water to rinsing shower, electromagnetic valves for discharge of collected sediment; filter vessel equipped with electromagnetic valve for supply of water, sand filter and activated carbon filters; conditioning vessel equipped with level regulator, exhaust fan, ultraviolet lamp, electromagnetic valve for supplying clean water to rinsing shower, electromagnetic valve for insertion of ozone through perforated plastic pipe on the conditioning vessel bottom, water pump and electromagnetic valve for discharge of treated water into spillway tank; spillway tank equipped with submerged water pump for supply of clean water for the rinsing of the reactor vessel and separator vessel by showers; manual exhaust valve for sampling of the treated water; direct current supply system equipped with solar panel charge regulator, battery set, frequency DC-AC converter; PLC controller for running the treatment procedure. Moreover, the reactor vessels in the existing solution are rectangular, i.e. square- shaped with reactor electrode set of inox fixed at the very bottom of the lower part of the reactor vessel. The aluminium reactor electrode set are arranged in the same way. Electrode plates are rectangular and placed paralelly one towards another at adequate distance and separated with electrical insulator. They are arranged in the reactor vessel vertically to the reactor vessel axis, so that during electrolysis, the generated gas bubbles on the electrode plates may freely emerge on the water surface. DC supply is applied to all the plates, taking into consideration that the positive pole is connected to every even plate of reactor electrode, and negative pole of supply to every uneven plate of reactor electrode. Electrode plates operate alternatingly during waste water treatment. In the first reaction square-shaped vessel electrolysis takes place by inox reactor electrode set, followed by electroflotation, oxidation, ozonation, disinfection with UV lamp, electromagnetic and ultrasonic treatment. In the second square-shaped reactor vessel water electrolysis is executed first by steel reactor electrode set, than by aluminium reactor electrode set, followed by electroflotation, oxidation, ozonation, disinfection with UV lamp, electromagnetic and ultrasonic treatment. Treated water from the second reactor vessel is discharged into square-shaped separator vessels with conic bottom, where sediment is separated from the treated water. Depending on the type of water to be treated in the device, the treated water from the separator vessel is discharged either into the conditioning vessel or on to the spillway tank with clean water, or into the filter vessel and on to the spillway tank with clean water. The procedure is performed completely automatically and without the need for an operator.

Procedure and wastewater treatment device by inventor Halldorson Jacob et al. (U.S. Pat. No. 6,358,398 issued on 19 March 2002) pays special attention to dissolved gasses for wastewater oxidation. The objective of their solution is to retain small gas bubbles in the solution as long as possible in order to obtain maximum effect of oxidising gas on wastewater contamination. That is achieved by introduction of oxidising gas into chamber for oxidation of wastewater under certain pressure. The infusion of oxidising gas remains under pressure in solution creating very small bubbles and providing very large surfaces for reaction with contaminants in wastewater. Dissolved gas in wastewater is maintained under pressure in oxidation chamber until it is established that the solution has sufficiently oxidized, at which point oxidizing gas is released from the solution by reducing pressure in chamber. The phases of the procedure are as follows: a) supplying water solution containing contaminants; b) oxidation in oxidation phase of the present contaminant in water solution; c) electrocoagulation in electrocoagulation phase of oxidized contaminants, including circulation through the inlet, i.e. outlet opening of the reactor vessel over the electrodes connected to the power source; by bringing into contract the contaminant and water solution with metal surfaces at certain distance with presence of electric power; by electrocoagulation of contaminants; and d) phase of separation of electro coagulated contaminants from the water solution. Ozone under pressure is most frequently used as oxidant, but other technically applicable oxidants may also be used. Further on, in the wastewater treatment, the device uses magnetic inductive coil for generation of magnetic field of 10,000 Gauss and 180 V pulse, while the metal aggregate through which the electric power is released enables electrocoagulation with significantly lower energy consumption than that in relation to large surface metal electrodes. The existing solution does not use pressured gas or closed system of pressurized vessels. The vessels are opened towards atmospheric pressure instead, and the system also does not use metal aggregates for electrocoagulation and separation of contaminants from water. Wastewater treatment phases of the existing solution significantly differ from the described patent as (a) preparation of waste water by water preparation tank; (b) reaction in the first reactor vessel, such as electrocoagulation caused by application of direct current on inox reactor electrode set, electrooxidation, electroflotation, disinfection with ozone and UV radiation with parallel mixing and passage through magnetic field of 4,000 Gauss and treatment with ultrasonic carrying wave of frequency of 40 kHz; (c) reaction in the second reactor vessel such as electrocoagulation caused by application of direct current first on steel reactor electrode set after which on aluminium reactor electrode set as well, electrooxidation, electroflotation, disinfection with ozone and UV radiation with parallel mixing and passage through magnetic field of 4,000 Gauss and treatment with ultrasonic carrying wave of frequency of 40 kHz; (d) coagulation and flocculation phase; (e) separation and sedimentation phase with separation of sediment into sediment collecting tank; (f) filtering of treated water through sand and activated carbon filters; (g) advanced oxidation phase by UV rays and ozone treatment.

Procedure for fluid treatment and fluid treatment system by patent holder Proudo CO LTD (EP 1138635 issued on 4 October 2001) is designed not only for treatment of lake and river water, but for the treatment of industrial contaminants the waste water of which comprise organic substances and microorganisms. The procedure includes preparation of input water by filtering in order to separate suspended particles and collection into the reception tank and measuring tank. The collected quantity of wastewater to be treated is then transferred into the treatment phase with active sludge where aerobic bacteria disintegrate present organic components. Water with organic contamination undergoes treatment with high-voltage electrodes driven by alternating current, and high-frequency microwaves where organic matter is separated from water. Moreover, the solution is being pumped into the vessel for low-frequency ultrasonic treatment with which the organic matter from dispersed state forms into clusters and thus becomes separated from the treated water assisted by oxidation gas treatment, such as ozone. For the purpose of improving the sedimentation rate, permanent magnets are applied. Oxidation and reduction reactions are provided by passage through the direct current high-voltage electrodes. Electrodes are made of a mixture of copper and wolfram. Suspension is then pumped into the separating tank. Treated water is further discharged into the recipient, and the collected sludge is transported for dehydration and solidification procedure. In the existing solution, the pre-treatment of contaminated water consists only of sedimentation. Microwaves are not used, and neither is active sludge treatment, i.e. aerobic bacteria treatment. The existing solution does not use permanent magnets, nor high-frequency microwaves. The said patent implements electrodes for alternating current made of platinum and titanic. Electrodes for direct current are made of copper and wolfram. Electrocoagulation in the existing solution is conducted by electrode plates arranged at certain distance driven by direct current, without high pulses of alternating current, and without compressed air compressors. The existing solution the reactor electrodes are made of inox in the first reactor vessel, while in the second reactor vessel, the first reactor electrode set are made of steel, and the second reactor electrode set is aluminium.

The patent by inventor Hashizuma Kazuto (EP1234802 issued on 28 August 2002.) describes the method and device for treatment of wastewater by means of ozone, hydrogen peroxide, ultraviolet radiation, electrolysis and filtering. During the process, the water continuously circulates through the system from vessel to vessel where certain phases of waste water treatment take place. Water preparation is made by aeration with mixing in the hydrogen peroxide solution with the input water in order to create conditions of oxidative degradation of hazardous substances. The technology is based on intensive wastewater treatment with ozone bubbles, sized 0.5 to 3 µm in particular. After intensive ozonation, the water is introduced into the ultraviolet radiation treatment vessel with rays of 180 to 310 nm wave length, coated from the inside with titanium dioxide. Water is then pumped into a tank for adjustment of pH value by adding hydrated lime into the vessel.

Further treatment is conducted in reactor vessel for electrolysis with two electrodes. The type of material for the electrodes depends on the concentration of heavy metals in the water to be treated. After the electrolysis, the water is treated in the next vessel by passing through activated carbon filter. In the existing solution, the wastewater is prepared only by sedimentation of coarse particles in the water preparation tank, without the application of filters, without aeration and adding hydrogen peroxide. Water is pumped into the next vessel, and in certain vessels several phases of water treatment run parallelly. The water is treated in the first reactor vessel without addition of chemicals and additives, impact of direct current with assistance of inox reactor electrode set, introduction of ozone to the vessel bottom, action of ultraviolet radiation, circulation through the electromagnetic field and ultrasonic action. In the second reactor vessel electrolysis and electroflocculation also takes place by application of direct current to metal plates. This time however, to the reactor electrode set are made of steel, and aluminium respectively, with simultaneous mixing with ozone, action of ultraviolet irradiation, circulation through the electromagnetic field and ultrasonic action. The existing solution does not use lime, nor any other chemical for water pH value adjustment, i.e. initiation of coagulation and flocculation. The treated water from the second reactor vessel is discharged into separator vessels where sediment is separated from the treated water. After the treatment, sediment is removed into the sediment collection tank, and the treated water prior to being discharged into recipient is either treated with ozone in the conditioning vessel with simultaneous action of ultraviolet irradiation, or is being filtered in the filtering vessel through the sand filter and finally, the activated carbon filter.

Procedure for treatment of industrial waste water by inventor John T. Towles (U.S. Pat. No. 5,679,257 of 21 October 1997) describes multi-phase process of industrial waste water treatment. The first phase includes preparation of waste water by filtering from contamination, exact adjustment of input pH value of waste water, intensive aeration with mechanic mixing. Created foam is removed from the surface, and hydrocyclone is used for filtering the outlet water from the bottom of the vessel. The next phase of the process is ozone treatment with system for return flow of gathered ozone from the vessel top to bottom, with simultaneous ultrasonic treatment in order to create coagulation and sedimentation conditions. After refiltering, the waste water is further introduced into the following treatment phase. In this phase, ozone and UV irradiation are applied with simultaneous impact of magnetic field and electrochemical flocculation which enhance further coagulation and sedimentation. Electrochemical flocculation takes place by application of direct or alternating current in four degrees, depending on established water contamination level. After the final filtering with activated carbon, the treated water exits the process. The system offers possibility of return rinsing of filter with treated water. The water from filter rinsing is returned to vessel for regulation of wastewater pH value. During the operation, the system uses acids. In the existing solution, the preparation of wastewater includes only sedimentation of coarse particles in water preparation tank, without changing the filters, without regulation of pH value of water by means of acids, without aeration and intensive mechanical mixing, without removal of foam from the surface and without filtering of outlet water with hydrocyclone. Water is treated in the first reactor vessel without addition of chemicals and additives, with effect of direct current on inox reactor electrode set, introduction of ozone to the vessel bottom, but without the system for return flow of ozone, by action of ultraviolet irradiation, circulation through the electromagnetic field and ultrasonic action. In the second reactor vessel, electrolysis and electroflocculation is caused by application of direct current first on steel reactor electrode set, then on aluminium with simultaneous mixing in of ozone, action of ultraviolet radiation, circulation through the electromagnetic field and ultrasound action. The treated water from the second reactor vessel is discharged into separator vessels where sediment is separated from the treated water. After the treatment, sediment is removed into the sediment collection tank, and the treated water prior to being discharged into recipient is either treated with ozone in the conditioning vessel with simultaneous action of ultraviolet irradiation, or is being filtered in the filtering vessel through the sand filter and finally, the activated carbon filter.

Patent by inventors Kim Hyun Ho and Lee Jae Chang (WO2011025183 of 3 April 2011) describes multi-phase process of wastewater treatment including processes such as electrocoagulation, ozonation and filtering. Preparation of waste water is made in the pH value regulation tank. Water from the wastewater tank passes through the grate which retains coarser impurities and is lead to the magnetic field generator which disperses waste water molecules. Moreover, the water enters into the electrocoagulation reactor unit that performs water purification. Micro bubbles of air are simultaneously introduced into the reactor unit by air supply system, which at the same time acts as rinsing system. Wastewater is filtered from the reactor through a series of filters, first with primary filter, and then with secondary filter. The purified water after exiting the filtering system is treated with ozone, and finally with chlorine. In the existing solution, the preparation of wastewater includes only sedimentation of solid particles in water preparation tank, without regulation of pH value of water. Water is treated in the first reactor vessel with direct current action on inox reactor electrode set, introduction of ozone to the vessel bottom, by action of ultraviolet radiation, circulation through the electromagnetic field and ultrasonic action. In the second reactor vessel, electrolysis and electroflocculation are caused by application of direct current first on steel reactor electrode set, then on aluminium with simultaneous mixing in of ozone, action of ultraviolet irradiation, circulation through the electromagnetic field and ultrasonic action. The purified water from the second reactor vessel is discharged into separator vessels where sediment is separated from the treated water. After the treatment, sediment is removed into the sediment collection tank, and the treated water prior to being discharged into recipient is either treated with ozone in the conditioning vessel with simultaneous action of ultraviolet irradiation, or is being filtered in the filtering vessel through the sand filter and finally, the activated carbon filter. The existing solution does not use air for aeration of water or chlorine.

Patent by inventor Park Young Gyu (KR20020004661 of 16 January 2002) describes water treatment process including electrocoagulation with cylindrical electrocoagulation apparatus, ozonation and filtering through the sand filter. The preparatory phase comprises of a tank with wastewater into which acids or bases are dozed in order to adjust the pH value to 5 or 6. At the same time, ozonation is performed in the tank of up to 15 ppm from the ozone generator. Water from the tank is repumped into the reactor vessel for electrocoagulation that would take place over the sand filter. In the reactor vessel for electrocoagulation, cathode and anode made of aluminum are arranged one in front of the other and are supplied with direct current of 400 A and 15 V which creates conditions for coagulation and flocculation. After the treatment, the water is discharged from the reactor vessel into the sedimentation chamber. In the existing solution, the preparation of wastewater includes only sedimentation of solid particles in water preparation tank, without regulation of pH value of water with acids or bases, or ozonation. Water is treated in the first reactor vessel with direct current action on inox reactor electrode set, introduction of ozone to the vessel bottom, by action of ultraviolet irradiation, circulation through the electromagnetic field and ultrasonic action. In the second reactor vessel, electrolysis and electroflocculation is caused by application of direct current first on steel reactor electrode set, then on aluminium with simultaneous mixing in of ozone, action of ultraviolet radiation, circulation through the electromagnetic field and ultrasound action. The treated water from the second reactor vessel is discharged into separator vessels where sediment is separated from the treated water. After the treatment, sediment is removed into the sediment collection tank, and the treated water prior to being discharged into recipient is either treated with ozone in the conditioning vessel with simultaneous action of ultraviolet irradiation, or is being filtered in the filtering vessel through the sand filter and finally, the activated carbon filter.

Procedure and wastewater treatment device from paper production by inventor Wei Hong et al. (CN201415963 issued 3 March 2010) describes procedure and device for treatment including electroflocculation, sedimentation and separation, biochemical treatment, disinfection and filtering. The device comprises a wastewater tank, electroflocculation tank, sedimentation chamber, water distribution tank, biochemical treatment tank, disinfection tank, reservoir and filter, circulating pump, return rinsing pumps connected to water reservoir designed for tank and filter rinsing. The procedure begins with wastewater treatment with electroflocculation, sedimentation and separation. It is followed by biochemical treatment, disinfection and filtering. In the existing solution, the preparation of wastewater includes only sedimentation of solid particles in water preparation tank. Water is treated in the first reactor vessel with inox reactor electrode set. By application of direct current to inox reactor electrode set, electrocoagulation, electrooxidation, electroflotation with simultaneous disinfection and mixing of ozone, UV rays, electromagnetic and ultrasound are created. In the second reactor vessel, water is treated by applying direct current first to steel reactor electrode set after which electrocoagulation, electrooxidation, electroflotation with simultaneous mixing in of ozone, action of ultraviolet irradiation, magnetic and ultrasonic treatment. After a while, direct current is supplied to aluminium reactor electrode sets, and again electrocoagulation, electrooxidation, electroflotation with simultaneous mixing in of ozone, action of ultraviolet radiation, electromagnetic and ultrasonic are performed. It is followed by coagulation and flocculation phase where the water in the second reactor vessel is left still for a while with slow mixing in of ozone. Water from the second reactor vessel is then lead to a separation vessel where clean water is separated from the sediment. Clean water from the upper part of the separator vessel is lead to treatment in the next phase, and the sediment from the bottom of the tank is removed into the sediment collector. Filtering phase ensues. Depending on the type of input waste water, i.e. type and quantity of contamination in it, the water from the separation phase is as necessary lead into the filter vessel for treatment through the sand filter, and after through the activated carbon filter as well. Depending on the type of input waste water, i.e. type and quantity of contamination in it, the water from the separation phase is as necessary lead to conditioning vessel for UV irradiation and ozone treatment. Treated water is lead to the treated water outlet
US2003/0183516A discloses the decontamination of water and the removal of heavy metals by means of electrolysis using, i.a., electrodes made from aluminium.

### DISCLOSURE OF THE INVENTION

The objective of the invention is the development of industrial waste water treatment plant operated by electrochemical methods, namely electrocoagulation, electrooxidation, electroflotation, electrochemical disinfection, UV disinfection, electromagnetic and ultrasonic treatment, flocculation and sedimentation of suspended contamination.

The application of procedure for electrochemical treatment of industrial wastewater, provides for the construction of a wastewater treatment plant applicable for exp. treatment of wastewater from boat pressure washing coated with antifouling agents with high concentrations of heavy metals, especially Cu, Zn and Pb, i.e. other types of industrial wastewater from metal industry, galvanization plants, landfill leaching waters, winery wastewaters, waste waters from production of potato chips, as well as for preparation of drinking water.

Construction and technical design of the plant has been simplified in relation to existing devices of the same type and purpose. It does not use additives or aggressive chemicals, while control pH meters and special dozers are not required. The device is run by batteries charged through sun panels or directly from external electrical power network.

After the wastewater treatment, the remaining sediment from the sediment collector tank is taken over by authorized company and transported to thermal treatment or solidification, after which it may be disposed at the landfill.

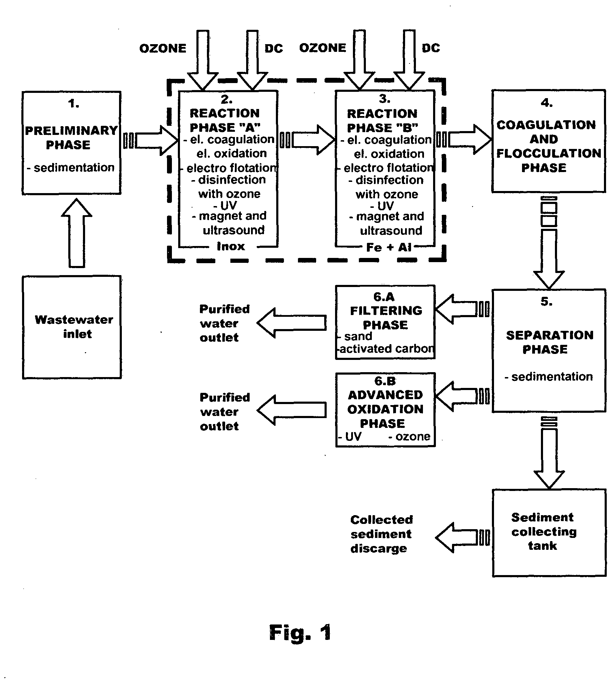

Procedure for electrochemical treatment of industrial wastewater and drinking waters in conformity with the scheme presented in Figure 1 consists of the following phases:
1) Preparatory phase - large contamination is separated from waste water by sedimentation.
2) Reaction phase A - water from preparatory phase is introduced into the first reaction vessel where inox reactor electrode set is located. By bringing direct current to inox reactor electrode set, electrocoagulation, electrooxidation, electrofloculation is initiated with simultaneous disinfection and mixing in of ozone, UV radiation, electromagnetic and ultrasonic treatment.
3) Reaction phase B - water from previous phase is introduced into second reactor vessel where it is treated by bringing direct current first on steel reactor electrode set, after which electrocoagulation, electrooxidation, electroflotation is initiated with simultaneous disinfection and mixing in of ozone, UV radiation, electromagnetic and ultrasonic treatment. After a while, direct current is brought to aluminium reactor electrode set, electrocoagulation, electrooxidation, electroflotation is initiated with simultaneous disinfection and mixing in of ozone, UV radiation, electromagnetic and ultrasonic treatment.
4) Coagulation and flocculation phase - water in second reactor vessel remains still for a while with slow mixing in of ozone.
5) Separation phase - water from second reactor vessel is pumped into separation vessel where separation of clean water from sediment is conducted. Clean water from the upper part of the separator vessel is pumped into treatment in the following phase, and the collected sediment from the vessel bottom is discharged into the sedimentation tank.
6)-A Filtering phase - depending on the type of input wastewater, i.e. the type and amount of contamination in it, the water from the separation phase is as necessary brought into filter vessel for treatment by passing through the sand filter, and after through the activated carbon filter. Treated water is pumped towards treated water outlet.
6)-B Advanced oxidation phase - depending on the type of input waste water, i.e. the type and amount of contamination in it, the water from the separation phase is as necessary brought into conditioning vessel for ultraviolet irradiation and ozone treatment. Treated water is pumped towards treated water outlet.

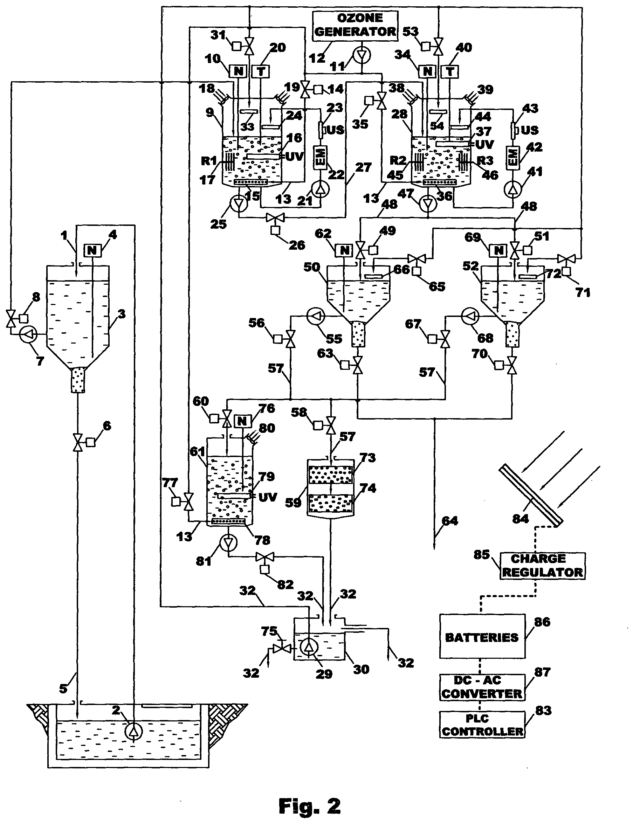

The description of the existing invention in conformity with the scheme of the device in Figure 2 is presented in the following text. The waste water 1 from the reception shaft is pumped with water pump 2 into water preparation tank 3. Water level in the tank is maintained within defined limits by means of level-regulator 4. After the water preparation tank 3 is filled to the upper level, time during which water in the sedimentation chamber is still is controlled, in which way sedimentation of coarser contamination to the tank bottom is performed.

After completion of the suspension phase in the water preparation tank 3, water pump 7 is switched on that by opening the electromagnetic valve 8 pumps into the reactor vessel 9 the prepared waste water that has been partially purified from coarser sediment. After pumping, the water pump 7 is stopped, and provided the bottom level in the tank was reached, the electromagnetic valve 6 opens and collected sediment 5 from the bottom of the tank with the remaining water is discharged into the reception shaft. After discharge, electromagnetic valve 6 is closed, so the refilling the tank cycle of the water preparation tank 3 with wastewater 1 from reception shaft may begin by means of water pump 2.

After pumping the prepared wastewater into the reactor vessel 9 to the defined level regulated by level-regulator 10, the process of ozonation and mixing of water with ozone may begin. By turning on the ozone pump 11 and by opening the electromagnetic valve 14 ozone 13 is pumped in from ozone generator 12 to the bottom of the reactor vessel 9 to the perforated pipe 15 on the bottom, and oxidation of organic matter is conducted, and water is further mixed with small bubbles.

When the water in the reactor vessel reaches a certain level, UV lamp 16 is switched on as well as inox reactor electrode R1 set 17 where under the influence of direct current oxidation occurs at anode (electrochemical corrosion) and Fe²⁺ ions are separated into the water. Water oxidation also happens on the anode where oxygen molecules and H⁺ ions are created. At the same time, water reduction occurs on cathode creating hydrogen and OH⁻ ions. Mixing of ozone with oxidation of organic matter also creates oxidation of Fe²⁺ to Fe³⁺. Iron hydroxides are created with oxidation of the created Fe²⁺ and Fe³⁺.

Previously described processes may be presented as following reactions:

| | |
|---|---|
| Anode (oxidation): | Fe⁰ → Fe²⁺ + 2e⁻ |
| | 2H₂O → O₂ + 4H⁺ |
| Cathode (reduction): | 2H₂O+2e⁻→+H₂^{↑}+2OH⁻ |
| Oxidation of Fe²⁺ with ozone: | Fe²⁺+e⁻→Fe³⁺ |

| Sedimentation/co-sedimentation: | |
|---|---|
| | Fe²⁺ + 2OH⁻ → Fe(OH)_{2↓} |
| | Fe³⁺ + 3OH⁻ → Fe(OH)_{3↓} |

Removal of suspended and dissolved contamination takes place by coagulation/flocculation with electrochemically generated Fe²⁺ and Fe³⁺, co-sedimentation with iron hydroxides and sedimentation of adequate metal hydroxides.

In the presence of chlorides during oxidation-reduction reactions taking place on anode and cathode, free chlorine and hypochlorite may be generated that are very strong oxidants and may perform indirect oxidation of organic matter as per the following reactions:

| Anode |
|---|
| 2Cl⁻ → Cl₂ + 2e⁻ |
| 6HOCl + 3H₂O → 2ClO₃⁻ + 4Cl⁻ + 1.5O₂ + 6e⁻ |
| 2H₂O → O₂ + 4H⁺ + 4e⁻ |

| Summarized reaction: |
|---|
| Cl₂ + H₂O → HOCl + H⁺ + Cl⁻ |
| HOCl → H⁺ + OCl⁻ |

| Cathode |
|---|
| 2H₂O + 2e⁻ → 2OH⁻ + H₂ |
| OCl⁻ + H₂O + 2e⁻ → Cl⁻ + 2OH⁻ |

Oxidation of organic matter is performed by means of oxygen generated in oxidation of water on anode and the *in situ* created hydrogen peroxide. However, the main mechanism for removal of dissolved organic matter is performed by oxidation by means of added ozone and indirect anode oxidation with assistance of *in situ* generated chloride and hypochlorite.

This is the most important phase in removal of organic matter, while removal of suspended and dissolved inorganic contamination is less important and mostly takes place in the second and third phase of electrochemical treatment.

During execution of certain treatment phases in the reactor vessel 9 suction fan 18 is continually switched on and introduces air into the reactor vessel and thus decreases the level of generated foam on the water surface, the same as exhaust fan 19 that eliminates gasses from the reactor vessel generated by reactor electrode set R1 operation and ozonation.

During operation in the reactor vessel 9 reaction temperature is monitored with thermocouple 20. Simultaneously to reactor electrode R1 set 17 operation, circulating pump 21 is switched on for additional mixing of water in the reactor vessel 9, electromagnet 22 and ultrasonic unit 23. Circulating pump 21 under pressure pumps water from the bottom of the tank through the electromagnet and the ultrasound unit to the shower 24 on the tank top. By passing though the shower under pressure, water is dispersed on the tank top to smaller particles, and again drops to the reactor tank bottom.

After passage of time required for treatment of waste water in the reactor vessel 9, reactor electrode R1 set 17, circulating pump 21, electromagnet 22, ultrasound unit 23 and UV lamp 16 are switched off. Ozonation and mixing of water stops, and ventilators 18 and 19 are turned off.

After a while, the water in the reactor vessel 9 has been treated and circulating water pump 25 is turned on and opens the electromagnetic valve 26 through which pumping of treated water 27 is conducted into the reactor vessel 28. After the level-regulator 10 detects that the reactor vessel 9 has almost been emptied, pressure pump 29 is turned on in spillway tank 30 with clean water for rinsing, at the same time as electromagnetic valve 31. Treated water 32 under pressure when entering the top of reactor vessel 9 comes under a shower 33 where it is dispersed and rinses the interior of the reactor vessel 9 from the remaining contamination and collected foam on the tank wall and reactor electrode set R1.

After rinsing of the reactor vessel 9, circulating water pump 25 is turned on and closes the electromagnetic valve 26. Closing the valve in the reactor tank 9 initiates a new cycle of filling with waste water 1 from the water preparation tank 3.

At the same time in the reactor vessel 28 level-regulator 34 by detecting the reached upper level initiates the UV lamp 37 and the ozonation process and mixing of water with ozone. By turning on the ozone pump 11, and opening the electromagnetic valve 35 from the ozone generator 12 ozone 13 is being pumped to the reactor vessel 28 bottom to the perforated pipe 36 on the bottom, and thus oxidation of organic matter is conducted, as well as mixing in the reactor vessel with small bubbles.

During operation of individual phases of treatment in reactor vessel 28 suction fan 38 is continually turned on inserting air into reactor vessel and reducing the level of generated foam on the water surface, while the exhaust fan 39 eliminates the created gasses in operation of reactor electrode sets R2, R3 and ozonation from the reactor vessel.

During operation in the reactor vessel 28 reaction temperature is monitored with thermocouple 40. Initiation of reactor electrode set R2 operation also turns on the recirculating water pump 41 for additional mixing of water in the reactor vessel 28, electromagnet 42 and ultrasonic unit 43. Recirculation water pump 41 under pressure pumps water from the tank bottom through the electromagnet 42 and ultrasonic unit 43 to the shower 44 on the tank top. Passing under pressure through the shower 44, water on top of the tank begins to disperse to smaller particles and again falls to the reactor vessel 28 bottom.

Reactor electrode R2 set 45 is made of steel and under the influence of direct current oxidation (electrochemical corrosion) reaction occurs on the anode and Fe²⁺ions are separated in the water. At the same time, on the cathode occurs reduction of water where hydrogen and OH⁻ ions are created. The same reactions are created on the anode and cathode as described for the inox reactor.

By reaction of Fe²⁺ and OH⁻ ions initial cores Fe(OH)₂ are generated creating gelatinous suspension and causing destabilization of negatively charged colloid with neutralization of charge in wastewater or complexation where the suspended and dissolved contamination creates ligands (L) that are bonded with Fe(OH)₂ as per the reaction:

L - H(aq)(OH)OFe(s) → L - OFe(s) + H₂O(l).

By neutralization of charge, conditions are created for aggregation of destabilized phases and their coagulation /flocculation. Electrochemically released steel may create, depending on pH of solution either monomer ions, or different polymer species such as: FeOH²⁺, Fe(OH)²⁺, Fe₂(OH)₂⁴⁺, Fe(OH)⁴⁻, Fe(H₂O)²⁺, Fe(H₂O)₅OH²⁺, Fe(H₂O)₄(OH)²⁺, Fe(H₂O)₈(OH)₂⁴⁺, Fe₂(H₂O)₆(OH)₄²⁺, that finally transform into Fe(OH)₃. Generated hydrogen bubbles on the way to the surface conduct additional mixing of water as well as flotation of suspended contamination to the surface. Mixing ensures constant contact of floccule with suspended and dissolved contamination from wastewater and their co-sedimentation with Fe(OH)₃.
After a while, the steel reactor electrode set R1 is turned off, and the aluminium reactor electrode R3 set 46 is turned on. Electrochemical corrosion of aluminium anode releases into the solution Al³⁺ ions that in contact with OH⁻ ions that are released with water reduction create aluminium hydroxide Al(OH)₃ that finally polymerizes into Al*ₙ*(OH)_{3*n*} as per the following reactions:

Al → Al³⁺(aq) + 3e-

Al³⁺ (aq) + 3H₂O → Al(OH)₃ + 3H+(aq)

nAl(OH)₃ → Alₙ(OH)₃ₙ

In water, depending on its pH value, there may be present other species of aluminium such as Al(OH)²⁺, Al₂(OH)₂⁴⁺ and Al(OH)⁴⁻. Removal of suspended and dissolved contamination is made through the same mechanism as in case of steel reactor. All secondary oxidation reduction reactions are also present that have been previously described for the steel reactor. With operation of reactor electrode set R3 intensive forming of floccule in the reactor vessel continues with constant ozonation and mixing of water. The operation of aluminium reactor electrode R3 set 46 the pH value of water gradually increases and returns to the designed value in the range between pH=7 and pH=8. With operation of reactor electrode sets R2 and R3, and intensive ozonation and mixing in reactor vessel 28 on water surface foam is created containing contamination.

After the expiration of time required for treatment of wastewater in reactor vessel 28 reactor electrode set R2 and then R3 are switched off, as well as recirculating pump 41, electromagnet 42, ultrasonic unit 43 and UV lamp 37. Ozonation and mixing of water is suspended, and ventilators 38 and 39are turned off.

Water in reactor vessel 28 has been treated and circulating water pump 47 is turned on which pumps the treated water 48 into separator tank 50 or 52, depending on their capacity to receive treated water.

Should separator tank 50 be available, by opening the electromagnetic valve 49 pumping of treated water 48 is conducted from reactor vessel 28 into separator tank 50.

Should separator tank 52 be available, by opening the electromagnetic valve 51 pumping of treated water 48 is conducted from reactor vessel 28 into separator tank 52.

After the level-regulator 34 detects that the reactor vessel 28 has almost been emptied, pressure pump 29 is turned on in the spillway tank 30 with clean water for rinsing, and along with it the electromagnetic valve 53. Treated water 32 under pressure on its entry into the top of reactor vessel 28 encounters a shower 54 where it disperses and rinses the interior of reactor vessel 28 from remaining contamination and collected foam off the tank walls and reactor electrode sets R2 and R3.

After rinsing the reactor vessel 28, circulating water pump 47 is turned off which closes electromagnetic valve 49 or 51 depending into which separator tank the treated water from the reactor vessel 28 was pumped.

After rinsing of reactor vessel 28, new cycle of filling with treated water 27 begins from reactor vessel 9, and new cycle of water treatment is initiated.

At the same time, in the separator tank 50 that has first been filled begins the process of gravitational sedimentation of the previously treated water. Water in separator tank 50 is left for a certain time still in order to allow sedimentation on the bottom. After the sedimentation process, circulating water pump 55 is turned on and electromagnetic valve 56 is opened so the treated water 57 from the upper part of the separator tank 50 is released either over electromagnetic valve 58 into filtering vessel 59 for filtering or over the electromagnetic valve 60 into conditioning vessel 61.

Level regulator 62 registers the first lower level of water in separator tank 50, suspends the release of clean water by turning off the water pump 55 and by closing the electromagnetic valve 56. By opening the electromagnetic valve 63 from separator tank 50 collected sediment 64 is released into sediment reception tank. Level-regulator 62 registers the second lower level in separator tank 50 which indicates that the collected sediment has been released. It is followed by separator tank 50 cleansing phase so that the pressure pump 29 is turned on in the spillway tank 30 with clean water for rinsing, and electromagnetic valve 65 as well. Treated water 32 under pressure when entering the separator tank 50 top encounters a shower 66 where it disperses and rinses the interior of separator tank 50 from remaining contamination and leaves through the electromagnetic valve 63. After rinsing, electromagnetic valve 63 closes, and the separator tank 50 is ready to receive the next batch of water for separation.

During the time for sedimentation in the separator tank 50, the already described procedure of water treatment is under way in the reactor vessel 28.

After completion of the following water treatment in the reactor vessel 28 waste water has been treated and circulating water pump 47 is turned on and pumps treated water 48 into the separator tank 52. By opening the electromagnetic valve 51 treated water 48 is pumped from the reactor vessel 28 into separator tank 52 where gravitational sedimentation process begins. Water in the separator tank 52 is left for a while still in order to allow sedimentation on the bottom. After completion of sedimentation, electromagnetic valve 67 opens and circulating water pump 68 is turned on, so the treated water 57 from the upper part of the separator tank 52 leaves either over the electromagnetic valve 58 into the filter vessel 59 for filtering, or through the electromagnetic valve 60 into the conditioning vessel 61.

Level-regulator 69 registers the first lower level of water in the separator tank 52, and suspends discharge of clean water by turning off the water pump 68 and by closing the electromagnetic valve 67. By opening the electromagnetic valve 70 collected sediment 64 is released from the separator tank 52 into the sediment reception tank. Level-regulator 69 then registers the second lower level in separator tank 52 which indicates that the collected sediment has been released. It is followed by separator tank 52 rinsing phase so that the pressure pump 29 is turned on in the spillway tank 30 with clean water for rinsing, and electromagnetic valve 71 as well. Treated water 32 under pressure when entering the separator tank 52 top encounters a shower 72 where it disperses and rinses the interior of separator tank 52 from remaining contamination and leaves through the electromagnetic valve 70. After rinsing, electromagnetic valve 70 closes, and the separator tank is ready to receive the next batch of water for separation.

Treated water 57 from separator tank is further treated in filter vessel 59 first by passing through the sand filter 73, and then through the activated carbon filter 74. Treated water 32 after filtering phase reaches the spillway tank 30 where it over the spillway leaves to be discharged into the recipient or the reception tank for reuse as technical water. Manual valve 75 serves for sampling the treated water 32.

In some cases, the treated water 57 from the separator is further treated in the conditioning vessel 61. Water is led into the vessel over the electromagnetic valve 60, while the level-regulator 76 registers that the vessel is full. Electromagnetic valve 60 is closed, and the exhaust fan 80, ozone pump 11, electromagnetic valve 77 that is used to bring ozone 13 into the vessel bottom to the perforated pipe 78 and UV lamp 79 are turned on. After a while, exhaust fan 80, ozone pump 11, electromagnetic valve 77 and UV lamp 79 are turned off. Water is pumped for the final treatment in conditioning vessel which is followed by discharge from the vessel by turning on the water pump 81 and electromagnetic valve 82 which leads the treated water 32 into the spillway tank 30 to be discharged into recipient.

The complete operation of the plant is run over the PLC controller 83.

Supply set comprises a solar panel 84 with charge regulator 85 and batteries 86, as well as DC-AC converter 87 that ensures electrical power for PLC controller supply, as well as all the other executive elements. Rechargeable batteries are charged over the solar panel 84 or from the external network as necessary.

### BRIEF DESCRIPTION OF THE DRAWINGS

The said characteristics, aspects and advantages of our invention shall be presented in conformity with the patent requirements with the attached description and explanations presented in the drawings, which are summarized below as follows:
Figure 1 presents a scheme of the procedure for electrochemical treatment of industrial wastewater and drinking water;
Figure 2 presents a scheme of the device for electrochemical treatment of industrial wastewater and drinking water;

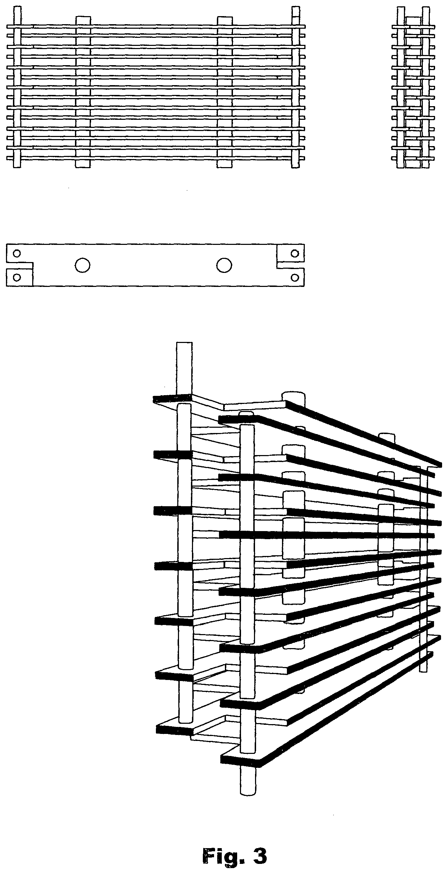

Figure 3 presents the mechanical structure of inox, steel and aluminum electrode plates used for electrochemical treatment of wastewater;

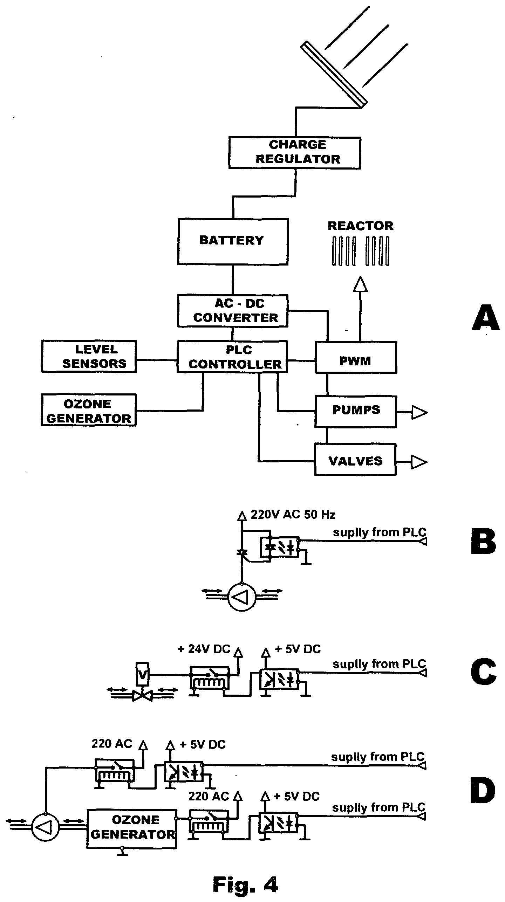

Figure 4 presents a block diagram of connections of electrical executive elements (A- executive elements connection scheme; B- pump connection scheme; C- electromagnetic valve connection scheme; D- ozone generator connection scheme).

### Description of Reference numerals

1 - waste water
2 - water pump
3 - water preparation tank
4 - level-regulator
5 - sediment
6 - electromagnetic valve
7 - water pump
8 - electromagnetic valve
9 - reactor vessel
10 - level-regulator
11 - ozone pump
12 - ozone generator
13 - ozone
14 - electromagnetic valve
15 - perforated pipe
16 - UV lamp
17 - reactor electrode set R1 from inox
18 - suction fan
19 - exhaust fan
20 - thermocouple
21 - circulating pump
22 - electromagnet
23 - ultrasonic unit
24 - shower
25 - water pump
26 - electromagnetic valve
27 - treated water
28 - reactor vessel
29 - pressure pump
30 - spillway tank
31 - electromagnetic valve
32 - treated water
33 - shower
34 - level-regulator
35 - electromagnetic valve
36 - perforated pipe
37 - UV lamp
38 - suction fan
39 - exhaust fan
40 - thermocouple
41 - circulating pump
42 - electromagnet
43 - ultrasonic unit
44 - shower
45 - reactor electrode set R2 from Fe
46 - reactor electrode set R3 from Al
47 - water pump
48 - treated water
49 - electromagnetic valve
50 - separator tank
51 - electromagnetic valve
52 - separator tank
53 - electromagnetic valve
54 - shower
55 - water pump
56 - electromagnetic valve
57 - treated water
58 - electromagnetic valve
59 - filter vessel
60 - electromagnetic valve
61 - conditioning vessel
62 - level-regulator
63 - electromagnetic valve
64 - sediment
65 - electromagnetic valve
66 - shower
67 - electromagnetic valve
68 - water pump
69 - level-regulator
70 - electromagnetic valve
71 - electromagnetic valve
72 - shower
73 - sand filter
74 - activated carbon filter
75 - manual valve
76 - level-regulator
77 - electromagnetic valve
78 - perforated pipe
79 - UV lamp
80 - exhaust fan
81 - water pump
82 - electromagnetic valve
83 - PLC controller
84 - solar panel
85 - charge regulator
86 - batteries
87 - DC-AC converter

### BEST MODE FOR CARRYING OUT THE INVENTION

The present invention will now be described in details with reference to Fig. 2 showing on four examples the applicability of this advanced water treatment system in operation.

### Example 1 - treatment of wastewater generated after pressure washing of boats

The device for electrochemical treatment of industrial wastewater is used in treatment of wastewater generated after pressure washing of boats coated with antifouling agents. Pressure pump 2 pumps the collected waste water 1 into the water preparation tank of total volume of 3000 L, where in the first phase of treatment it is left still for the duration of Tₘ = 60 min. Coarser particles of contamination, sand and undissolved paint cracks are separated on the bottom of water preparation tank.

After sedimentation, water pump 7 transfers the water from the water preparation tank 3 into the reactor vessel 9 of 220 l volume, where ozonation and mixing of water with ozone begins in the duration of T₁ = 30 min. Ozone 13 from ozone generator 12 is pumped in at flow rate Q = 5 l/min on the bottom of reactor vessel, in which way the oxidation of organic matter takes place, at the same time as mixing in the reactor vessel 9.

After the expiration of intensive ozonation, set of reactor electrode R1 is turned on. That reactor electrode set 17 is made of inox, and has P₁ =0.6552 m² surface. Its operation during T₂ = 15 min at U₁ = 12 V and I₁ = 70 A creates electrochemical corrosion of the steel anode, where Fe²⁺ are released into water and which in reaction with OH⁻ ions generated in water reduction on the cathode and by further hydrolysis create gelatinous products, most frequently Fe(OH)₃. The created Fe(OH)₃ destabilizes colloid which again created conditions for coagulation/flocculation of heavy metal and other suspended contamination in waste water. Advanced oxidation of organic matter happens with assistance of ozone (either brought in or created *in situ*), free chlorine and hypochlorite created *in situ* in oxidation reduction reactions of chloride at anode and cathode, oxygen (generated by water oxidation on anode), hydrogen peroxide created *in situ.* After the expiration of designed time, inox reactor electrode R1 set 17 is turned off. Water is transferred in reactor vessel 28. Steel electrode R2 set 45 turns on. Total surface P₂ = 0,6552 m². Its operation in duration of T₃ = 15 min at U₂ = 12 V and I₂ = 65 A set of reactor electrode R2 continues to intensively form the floccule in reactor vessel 28 with simultaneous constant ozonation and mixing of water. The removal principle of heavy metals, suspended contamination and organic matter is the same as for the inox reactor electrode set.

After the expiration of designed time set of reactor electrode R2 is turned off, and aluminium reactor electrode R3 set 46 turns on. Total surface P₃ = 0,5688 m². Its operation in duration of T₄ = 20 min at U₃ = 12 V and I₃ = 65 A set of reactor electrode set R2 continues to intensively form the floccule in reactor vessel 28 with simultaneous constant ozonation and mixing of water. The removal principle of heavy metals, suspended contamination and organic matter is the same as for the steel reactor electrode set.

With aluminium set of reactor electrode R3 operation, the water pH value gradually increases from the previous pH = 7.25 to pH = 7.31. Generally, the treated water after treatment in reactor vessel 28 reaches the deigned value ranging between pH=7 and pH=8.

By action of the reactor electrode sets R1, R2 and R3 and intensive ozonation and mixing in the reactor vessel foam with collected contamination is formed on the water surface. During the operation of individual phases of treatment in reactor vessels, suction fan is constantly turned on and inserts air into reaction vessel for the purpose of reducing the foam level on the water surface, as well as exhaust fan which expels the gasses collected in the reaction vessel by operation of reactor electrode sets R1, R2 and R3 and ozonation. Simultaneously to the operation of reactor electrode sets R1, R2 and R3 recirculating water pump additionally mixes water in reaction vessel with parallel operation of electromagnet and ultrasonic unit.

After completion of operation of reactor electrode set R3 flocculation phase and mixing of water with ozone begins in the reactor vessel 28 in the duration of T₅ = 15 min. At the end of treatment, ozonation and mixing of water ceases in the reactor vessel 28, and ventilators are turned off. Water in the reactor vessel 28 is treated and is discharged into separation tank 50. The interior of reactor vessel is cleaned from remaining contamination and generated foam from the reactor electrode sets R2 and R3, walls with clean water over the fixed rotating shower, while the water from rinsing is discharged into the separation tank 50.

Gravitational sedimentation process begins in the separation tank 50, i.e. sedimentation of the previously treated water in the duration of T₆ = 75 min in order for the collected sediment to sediment on the bottom. After the designed time, treated water above the sediment is discharged through a filter 73 made of sand layer, and under which there is granulated activated carbon layer 74 into the natural reception or collection tank for reuse.

During the discharge, daily samples of treated water have been taken out of which composite monthly samples were prepared for the analysis. Monitoring of system operation was performed during trial run in the duration of 18 months.

Results of chemical analysis (mean values of element concentration) of treated water from the first testing of device have been presented in Table 1, while the results of analysis of composite samples to specific parameters required by water permit in the Table 1a. The results show that treated waters completely comply with the conditions to be discharged into the natural recipient. The system is efficient in removal both heavy metals and organic components to the parameter values complying for discharge into environment. In the reactor vessel only the target component necessary for coagulation/flocculation of contamination is created by electrochemical process, so content of total dissolved matter is not increased because of which the treated water is suitable for reuse.

**Table 1. Concentrations of heavy metals and other parameters in wastewater after pressure washing of boats prior and after treatment in electrochemical treatment of industrial wastewater plant**

| | V (mg/L) | Cr (mg/L) | Fe (mg/L) | Ni (mg/L) | Cu (mg/L) | Zn (mg/L) | Pb (mg/L) | pH | TOC (mg/L) | KPK (mg/L) | BPK5 (mg/L) |
|---|---|---|---|---|---|---|---|---|---|---|---|
| Prior to treatment | 1.098 | 0.076 | 12.500 | 0.130 | 56.170 | 33.880 | 0.690 | 7.25 | 130 | 160 | 20 |
| Treated water | 0.000 | 0.018 | 0.020 | 0.053 | 0.221 | 0.497 | 0 | 7.31 | 19 | 61 | 4 |
| Limit value* | 0.050 | 0.100 | 2.000 | 0.500 | 0.500 | 2.000 | 0.500 | 6.5-9 | 30 | 125 | 25 |

| | | | | | | | | | | | |
|---|---|---|---|---|---|---|---|---|---|---|---|
| * Ordinance on emission limit values for wastewater discharges (OG 87/10) | | | | | | | | | | | |

Basic parameters of process from example 1 at treatment of wastewater generated in pressure washing of boats with plat for electrochemical treatment of industrial waters are presented in Table 2.

**Table 1a. Results of trial run during 18 month period including composite monthly samples**

| Sample | Concentration (mg/L) | | | | |
|---|---|---|---|---|---|
| | Cr | Cu | Zn | Pb | COD |
| 1 | 0.033 | 0.024 | 0.021 | 0.016 | 67 |
| 2 | 0.041 | 0.027 | 0.037 | 0.028 | 81 |
| 3 | 0.057 | 0.024 | 0.069 | 0.021 | 89 |
| 4 | 0.066 | 0.011 | 0.091 | 0.033 | 94 |
| 5 | 0.078 | 0.031 | 0.099 | 0.047 | 97 |
| 6 | 0.042 | 0.004 | 0.073 | 0.022 | 67 |
| 7 | 0.031 | 0.007 | 0.041 | 0.013 | 53 |
| 8 | 0.049 | 0.003 | 0.029 | 0.011 | 49 |
| 9 | 0.031 | 0.018 | 0.053 | 0.021 | 61 |
| 10 | 0.063 | 0.013 | 0.027 | 0.027 | 81 |
| 11 | 0.032 | 0.017 | 0.031 | 0.034 | 75 |
| 12 | 0.024 | 0.003 | 0.034 | 0.032 | 77 |
| 13 | 0.039 | 0.015 | 0.028 | 0.021 | 22 |
| 14 | 0.035 | 0.012 | 0.025 | 0.021 | 11 |
| 15 | 0.047 | 0.014 | 0.037 | 0.013 | 35 |
| 16 | 0.051 | 0.011 | 0.021 | 0.019 | 47 |
| 17 | 0.048 | 0.017 | 0.018 | 0.016 | 29 |
| 18 | 0.049 | 0.011 | 0.012 | 0.011 | 31 |
| **LV*** | **0.5** | **0.5** | **2** | **0.5** | **125** |

| | | | | | |
|---|---|---|---|---|---|
| * Ordinance on emission limit values for wastewater discharges (OG 87/10) | | | | | |

**Table 2. Basic parameters of process of treatment of wastewater generated after pressure washing of boats with electrochemical treatment of industrial wastewater plant**

| **TREATMENT PHASE** | **Parameter** | **Quantity** | **Unit of measurement** |
|---|---|---|---|
| **Water preparation tank** | | | |
| Pre-treatment of input water by stilling | Time Tₘ | 60 | min |
| | | | |

| **Reactor vessel** | | | |
|---|---|---|---|
| Ozone flow | Flow Q | 5 | L/min |
| | Time T₁ | 30 | min |
| Reactor electrode set R1 | | | |
| | Surface P₁ | 0.6552 | m² |
| | Distance d₁ | 10 | mm |
| | Time T₂ | 15 | min |
| | Voltage U₁ | 12 | V |
| | Power I₁ | 70 | A |
| | Surface P₂ | 0.6552 | m² |
| Reactor electrode set R2 | Distance d₂ | 10 | mm |
| | Time T₃ | 15 | min |
| | Voltage U₂ | 12 | V |
| | Power I₂ | 65 | A |
| | Surface P₃ | 0.5688 | m² |
| Reactor electrode set R3 | Distance d₃ | 10 | mm |
| | Time T₄ | 20 | min |
| | Voltage U₃ | 12 | V |
| | Power I₃ | 65 | A |
| | | | |
| Flocculation and mixing | Time T₅ | 15 | min |
| | | | |

| **Separation tank** | | | |
|---|---|---|---|
| Sedimentation | Time T₆ | 75 | min |

### Example 2 - Treatment of wastewater generated in galvanization process

Electrochemical treatment device for industrial wastewater is used in treatment of wastewater generated in galvanization process.

From the neutralization reservoir, waste water 1 is pumped with pressure pump 2 into 2201 volume reactor vessel 28. Water level in the reaction vessel 28 is maintained in designed limits by level-regulator 34, and when the water in the reactor vessel 28 reaches the designed level, set of reactor electrode set R2 is turned on that is made of steel and has total surface of P₁ = 0.6552 m². Its operation in duration of T₁ = 15 min at U₁ = 12 V and I₁ = 45 A set of reactor electrode R2 creates electrochemical corrosion of the anode, where Fe²⁺ ions are released in the water and perform chromium (VI) reduction into chromium (III) with parallel oxidation of Fe²⁺ into Fe³⁺. In reaction with OH⁻ ions generated in water reduction on the cathode Fe(OH)₃ and Cr(OH)₃ are generated as per the following reactions:

Cro²⁻₄ (aq) + 3Fe²⁺ (aq) + 4H₂O(l) → 3Fe³⁺ (aq) + Cr³⁺ (aq) + 8OH⁻ (aq)

or

CrO²⁻₄ (aq) + 3Fe²⁺ (aq) + 4H₂O(l) + 4OH⁻ (aq) → 3Fe(OH)₃ ↓ +Cr(OH)₃ ↓

The generated Fe(OH)₃ destabilizes colloid which creates conditions for coagulation/flocculation of heavy metals and other suspended contamination in wastewater. Mixing of suspension is performed with electrochemically generated gasses.

After the expiration of designed time, aluminium reactor electrode set R3 is turned on. Its total surface P₂ = 0.5688 m². Its operation in duration of T₂ = 15 min at U₂ = 12 V and I₂ = 40 A set of reactor electrode set R3 intensively forms floccule in reactor vessel 28 with simultaneous constant ozonation and mixing of water. The removal principle of heavy metals, suspended contamination of mostly inorganic type is the same as for the steel reactor electrode set. With aluminium set of reactor electrode R3 operation, the water pH value gradually increases from the previous pH = 6.11 to pH = 7.46. Generally, the treated water after treatment in reactor vessel reaches the deigned value ranging between pH=7 and pH=8.

Parallel to set of reactor electrode R3 operation, ozone 13 is pumped from ozone generator 12 at flow rate Q = 10 L/min to the reactor vessel 28 bottom in duration T₂ = 15 min which creates oxidation of organic matter, oxidation of remains of Fe²⁺ into Fe³⁺ and mixing of suspension of water and floccule in the reaction vessel 28.

By action of the reactor electrode sets R2 and R3 and intensive ozonation and mixing in the reactor vessel 28 foam with collected contamination is formed on the water surface. During the operation of individual phases of treatment in reactor vessel 28, suction fan 38 is constantly turned on and inserts air into reaction vessel 28 for the purpose of reducing the foam level on the water surface, as well as exhaust fan 39 which throws out the gasses collected in the reaction vessel 28 by operation of reactor electrode sets R2 and R3 and ozonation. Simultaneously to the operation of reactor electrode sets R2 and R3 recirculating water pump 41 additionally mixes water in reaction vessel 28 with parallel operation of electromagnet 42 and ultrasonic unit 43.

After expiration of the designed time, set of reactor electrode set R3 is turned off.

After completion of operation reactor electrode set R3 in reactor vessel 28 flocculation phase and mixing of water with ozone begins in the duration of T₃ = 15 min. At the end of treatment, ozonation and mixing of water is suspended in the reactor vessel 28, and ventilators38 and 39 are turned off. Water in the reactor vessel 28 is treated and is released into next phase of treatment for sedimentation. The interior of reactor vessel 28 is cleaned from remaining contamination and generated foam from the reactor electrode sets R2 and R3 and chamber walls with treated water 32 over the fixed rotating shower 44, while the water from rinsing is released into the separation tank 50.

Gravitational sedimentation process begins in the separation tank 50, i.e. sedimentation of the previously treated water in the duration of T₄ = 75 min in order for the collected sediment to sediment on the bottom.

After the expiration of designed time, treated water above the sediment is discharged into the conditioning vessel 61 where intensive disintegration of organic matter and ammonia takes place by parallel action of ozone from ozone generator (Q = 10 L/min) and UV radiation in the duration of T₅ = 30 minutes. Destruction of organic matter and ammonia is conducted with reactive oxidative products (hydroxyl and peroxyl radicals, superoxide) generated by photolysis of ozone where hydrogen peroxide is created, and additional reactions of hydrogen peroxide and UV irradiation, as well as ozone and hydrogen peroxide as per the following reactions:

O₃ + H₂O + hv → H₂O₂ + O₂, hv <310 nm

O₃ + H₂O₂ → HO₂^{∘}+^{∘}OH +O₂

H₂O₂+ hv → 2^{∘}OH

Balance: H₂O₂+H₂O ↔ H₃O⁺ + HO₂^{∘}

^{∘}OH + O₃ → O₂ + HO;

^{∘}OH + H₂O₂ → O₂^{∘} + H₂O + H⁺

^{∘}OH + O₂^{∘} → OH⁻ + O₂

^{∘}OH + ^{∘}OH → H₂O + O^{∘}

O₃ + O₂^{∘} → O₃^{∘} + O₂

O₃^{∘}+H₂O → ^{∘}OH + OH⁻ + O₂

O₃+HO₂^{∘}→ O₂^{∘}+^{∘}OH + O₂

HO₂^{∘} + HO₂^{∘} → H₂O₂ + O₂+ OH⁻

In surplus H₂O₂:

^{∘}OH + HO₂^{∘}→ H₂O+O₂

Treated water after oxidation is led into the spillway tank 30 of pure water from where it is run over the flow meter to be discharged into the recipient or reception tank to be reused as technological water. During discharge, a sample of treated water was taken for analysis, and the results are shown in Table 3.

As it is seen from the Table 3, high percentage of heavy metal removal was achieved, varying from 98,22% to 100,00%. The highest removal degree was achieved for elements with highest input values. Nitrates and nitrites have been completely eliminated by electrochemical reduction into hydrogen by means of electrochemically generated Fe²⁺ ions, while the removal of organic component (about 90%) and ammonia (> 95%) was achieved in smaller part by indirect anode oxidation through electrochemically generated hypochlorite, and largely in the final oxidation phase of ozonation/UV treatment.

Basic process parameters from example 2 at treatment of wastewater generated in galvanization procedure with electrochemical treatment device for industrial wastewater is presented in the Table 4.

**Table 3. Parameter concentrations in wastewater before and after the electrochemical treatment in combination with oxidation, limit values of parameters and removal percentage for each parameter.**

| Parameter (mg/L) | Before treatment | After treatment | LV | Removal percentage (%) |
|---|---|---|---|---|
| Cr (VI) | 6.3 | 0.006 | 0.1 | 99.90 |
| Fe | 440.4 | 0.012 | 2 | 100.00 |
| Ni | 0.731 | 0.013 | 0.5 | 98.22 |
| Cu | 3.5 | 0.027 | 0.5 | 99.23 |
| Zn | 262.5 | 0.407 | 2 | 99.84 |
| TOC | 140 | 12 | 30 | 91.43 |
| COD | 270 | 27 | 125 | 90.00 |
| BOD₅ | 20 | 5 | 25 | 75.00 |
| cr | 182.7 | 182 | - | - |
| NH₄⁺ | 2.46 | 0.11 | 10 | 95.52 |
| NO₂⁻ | 0.033 | 0 | 1 | 100.00 |
| NO₃⁻ | 5.9 | 0 | 2 | 100.00 |
| pH | 6.11 | 7.46 | 6.5-9 | - |

**Table 4. Basic parameters of process of treatment of wastewater generated in galvanization procedure with electrochemical treatment of industrial wastewater plant**

| **TREATMENT PHASE** | **Parameter** | **Quantity** | **Unit of measurement** |
|---|---|---|---|
| **Water preparation tank** | | | |
| | | | |
| **Reactor vessel** | | | |
| | Surface P₂ | 0.6552 | m² |
| Reactor electrode set R2 | Distance d₂ | 10 | mm |
| | Time T₁ | 15 | min |
| | Voltage U₁ | 12 | V |
| | Power I₁ | 45 | A |
| Reactor electrode set R3 | Surface P₂ | 0.5688 | m² |
| | Distance d₂ | 10 | mm |
| | Time T₂ | 15 | min |
| | Voltage U₂ | 12 | V |
| | Power I₂ | 40 | A |
| | Ozone flow | 10 | L/min |
| | | | |
| Flocculation and mixing | Time T₃ | 15 | min |
| | | | |

| **Separation tank** | | | |
|---|---|---|---|
| Sedimentation | Time T₄ | 75 | min |
| | | | |

| **Conditioning vessel** | | | |
|---|---|---|---|
| | Time T₅ | 30 | min |
| Oxidation | Ozone flow | 10 | L/min |
| | UV | 9 | KW |

### Example 3 - Preparation of drinking water

Groundwater from the bored well loaded with heavy metals, arsenic, organic matter and ammonia was treated with electrochemical treatment plant

Raw water 1 from the reception tank is pumped with pressure pump 2 into the 220 l volume reactor vessel 28. Water level in the reactor vessel 28 is maintained within designed levels by level-regulator 34, and when water reach the wished value in reactor vessel 28 set of reactor electrode set R2 that is made of steel and has total surface of P₁ = 0.6552 m² is turned on. The operation of reactor electrode set R2 during T₁ = 15 min at U₁ = 12 V and I₁ = 50 A leads to electrochemical corrosion of the anode where simultaneously Fe²⁺ ions are released into the water that perform reduction of chromium (VI) into chromium (III) and in parallel the oxidation of Fe²⁺ to Fe³⁺.

Generated Fe(OH)₃ leads to destabilization of the colloid which created conditions for coagulation/flocculation of heavy metals and other suspended contamination from wastewater. Mixing of suspension is performed by electrochemically generated gasses.

After the expiration of designed time, aluminium set of reactor electrode R3 turns on. Total surface P₂ = 0.5688 m². Its operation in duration of T₂ = 20 min at U₂ = 12 V and I₂ = 50 A set of reactor electrode R3 continues to intensively form the floccule in reactor vessel 28 with simultaneous constant ozonation and mixing of water. The removal principle of dissolved and suspended mostly inorganic contamination is the same as for the steel reactor electrode set. Simultaneously to operation of set of reactor electrode R3, ozone 13 is pumped from ozone generator 12 with flow rate of Q = 10 L/min to the bottom of the reactor vessel in duration of T₃ = 15 min leading to oxidation of As³⁺ into As⁵⁺ that has greater affinity to iron, partial oxidation of organic matter, oxidation of remains of Fe²⁺ to Fe³⁺ and mixing of suspension of water and floccule in the reaction vessel 28.

By action of the reactor electrode sets R2 and R3 and intensive ozonation and mixing in the reactor vessel 28 foam with collected contamination is formed on the water surface. During the operation of individual phases of treatment in reactor vessel 28, suction fan 38 is constantly turned on and inserts air into reaction vessel 28 for the purpose of reducing the foam level on the water surface, as well as exhaust fan 39 which throws out the gasses collected in the reaction vessel 28 by operation of reactor electrode sets R2 and R3 and ozonation. Simultaneously to the operation of reactor electrode sets R2 and R3 recirculating water pump 41 additionally mixes water in reaction vessel 28 with parallel operation of electromagnet 42 and ultrasonic unit 43.

After expiration of design time, set of reactor electrode plates R3 is turned off.

After completion of operation of reactor electrode set R3 flocculation phase and mixing of water with ozone begins in the reactor vessel 28 in the duration of T₃ = 15 min. At the end of treatment, ozonation and mixing of water is suspended in the reactor vessel 28, and ventilators 38 and 39, electromagnet 42 and ultrasonic set 43 are turned off. Water in the reactor vessel 28 is treated and is released into separation tank 50. The interior of reactor vessel 28 is cleaned from remaining contamination and generated foam from the reactor electrode sets R2 and R3 and chamber walls with clean water over the installed rotating shower 44, while the water from rinsing is released into the separation tank 50.

Gravitational sedimentation process begins in the separation tank 50, i.e. sedimentation of the previously treated water in the duration of T₄ = 75 min in order for the collected sediment to sediment on the bottom.

Treated water above the sediment after the expiration of designed time is released into the conditioning vessel 61 where intensive destruction of organic matter and ammonia takes place by action of ozone 13 dozed from the ozone generator 12 (Q = 10 L/min) and UV radiation in the duration of T₅ = 30 minutes. Destruction of organic matter and ammonia is conducted with reactive oxidative products (hydroxyl and peroxyl radicals, superoxide) generated by photolysis of ozone where hydrogen peroxide is created, and additional reactions of hydrogen peroxide and UV radiation, as well as ozone and hydrogen peroxide.

Treated water after oxidation runs into the spillway tank 30 for clean water from where it is discharged into the recipient over the flow meter or is released into the reception tank to be reused as technical water. During the discharge, sample of treated water was taken for analysis and the results have been presented in Table 5.

As it may be seen from the Table 5, combination of electrochemical treatment and oxidation with ozone/UV radiation achieved high degree of heavy metal removal ranging from 94.53% to 100,00%. Moreover, over 93% of ammonia and organic matter was removed, and more than 51% of fluoride and over 72% of sulphates. All the measured parameters in outlet water are in conformity with the Ordinance on sanitary quality of drinking water.

Basic parameters of process from example 3 of preparation of drinking water in combination with electrochemical methods are presented in Table 6.

**Table 5. Parameter values in groundwater prior and after electrochemical treatment in combination with oxidation and limit values of parameters as per the Ordinance on sanitary quality of drinking water (OG 47/08).**

| Parameter | Untreated water | Treated water | MCL* |
|---|---|---|---|
| V (µg/L) | 20.1 | 1.1 | 5 |
| Cr (µg/L) | 553.2 | 3.7 | 50 |
| Mn (µ/L) | 1110.4 | 18.4 | 50 |
| Fe (µ/L) | 1621.1 | 7.2 | 300 |
| Ni (µ/L) | 200.7 | 0 | 20 |
| Cu (µg/L) | 1483.2 | 4.3 | 2000 |
| Colour (µg/PtCo) | 754 | 0 | 20 |
| Turbidity (NTU) | 102 | 0 | 4 |
| Zn (µg/L) | 290.3 | 6.3 | 3000 |
| As (µg/L) | 27.4 | 0 | 10.0 (50) |
| Pb (µg/L) | 82.8 | 2.7 | 10.0 (25) |
| Conductivity (mS/cm) | 0.99 | 0.65 | 2.5 |
| TDS (mg/L) | 690 | 423 | - |
| NH⁺₄ (mg/L) | 1.83 | 0.12 | 0.5 |
| F⁻ (mg/L) | 0.37 | 0.18 | 1.5 |
| SO₄²⁻(mg/L) | 144 | 40 | 250 |
| COD (mg/L) | 16 | 1 | 5 |

| | | | |
|---|---|---|---|
| * Ordinance on sanitary quality of drinking water (OG 47/08). | | | |

**Table 6. Basic parameters of process of preparation of drinking water in combination with electrochemical methods and ozone and UV radiation oxidation**

| **TREATMENT PHASE** | **Parameter** | **Quantity** | **Unit of measurement** |
|---|---|---|---|
| **Water preparation tank** | | | |
| | | | |
| **Reactor vessel** | | | |
| | Surface P₁ | 0.6552 | m² |
| Reactor electrode set R2 | Distance d₁ | 10 | mm |
| | Time T₁ | 15 | min |
| | Voltage U₁ | 12 | V |
| | Power I₁ | 50 | A |
| Reactor electrode set R3 | Surface P₂ | 0.5688 | m² |
| | Distance d₂ | 10 | mm |
| | Time T₂ | 15 | min |
| | Voltage U₂ | 12 | V |
| | Power I₂ | 50 | A |
| | Ozone flow | 10 | L/min |
| Flocculation and mixing | Time T₃ | 15 | min |
| | | | |

| **Separation tank** | | | |
|---|---|---|---|
| Sedimentation | Time T₄ | 75 | min |
| | | | |

| **Conditioning vessel** | | | |
|---|---|---|---|
| Oxidation | Ozone flow Q | 10 | L/min |
| | UV | 9 | KW |
| | Time T₅ | 30 | min |

### Example 4 - Treatment of leaching water

The device for electrochemical treatment was applied in leaching water presented by black to brown colloid solutions highly loaded with organic matter (humic and fulvic acids), nutrients and heavy metals. Due to low biodegradability and complexity of the system in comparison to other types of industrial effluents, leachate is the most difficult to treat and to achieve required quality of the outlet effluent for which reason combination of treatment methods is required.

Leaching water 1 from the collection reservoir is pumped with pressure pump 2 into the first reaction vessel 9 of 220 l volume. Water level in the reactor vessel 9 is maintained within designed levels by level-regulator 10, and when the water reaches a certain level at the reactor vessel, set of reactor electrode R1 that is made of inox is turned on and has total surface of P₁ = 0.6552 m². The operation of set of reactor electrode R1 during T₁ = 15 min at U₁ = 12 V and I₁ = 60 A leads to electrochemical corrosion of the anode where simultaneously Fe²⁺ ions are released into the water that perform reduction of chromium (VI) into chromium (III) and in parallel the oxidation of Fe²⁺ to Fe³⁺. Generated Fe(OH)₃ leads to destabilization of the colloid which created conditions for coagulation/flocculation of high molecule mass organic matter, heavy metals other suspended contamination from wastewater. Mixing of suspension is performed by electrochemically generated gasses. At the same time, indirect anodic oxidation creates destruction of organic matter into CO₂ and water and ammonia into hydrogen by means of in situ generated chloride and hypochlorite.

The reaction vessel 9 has constantly turned on suction fan 18 that introduces air with purpose to reduce the level of generated foam on the water surface, and exhaust fan 19 that throws out of the reactor vessel gasses collected by reactor electrode set R1 operation. Parallel with the reactor electrode operation, recirculating water pump 21 additionally mixes water in the reaction vessel 9, with simultaneous operation of electromagnet 22 and ultrasonic set 23. Operation of electromagnet 22 softens the water, while ultrasonic set 23 creates reactive oxidative products in the cavitation bubbles that destruct organic matter and ammonia.

After the expiration of designed time, the suspension is pumped into second reaction vessel 28, where steel set of reactor electrode R2 is turned on. Total surface of the reactor P₂ = 0.6552 m². Its operation in duration of T₂ = 20 min at U₂ = 12 V and I₂ = 60 A reduces chromates by electrochemically generated Fe²⁺ ions and intensively form the floccule in reactor vessel. Both ventilators 38 and 39 are turned on as well as water pump 41, electromagnet 42 and ultrasonic set 43.

After the expiration of designed time set of reactor electrode R2 switches off and aluminium set of reactor electrode R3 turns on. Its total surface is P₃ = 0.5688 m². Its operation in duration of T₃ = 30 minutes at U₃ = 12 V and I₃ = 60 A intensively form the floccule in reactor vessel 28 and the remains Fe²⁺ are oxidized to Fe³⁺ with ozone 13 dozes from ozone generator 12 at flow of 10 L/min. Both ventilators 38 and 39 are turned on as well as water pump 41, electromagnet 42 and ultrasonic set 43.

After expiration of design time, set of reactor electrode R3 is turned off.

After completion of operation of set of reactor electrode R3 flocculation phase and mixing of water with ozone begins in the reactor vessel 28 in the duration of T₄ = 15 min. At the end of treatment, ozonation and mixing of water is suspended in the reactor vessel 28, and ventilators 38 and 39, electromagnet 42 and ultrasonic set 43 are turned off. Water in the reactor vessel 28 is treated and is released into separation tank 50. The interior of reactor vessel 28 is cleaned from remaining contamination and generated foam from the reactor electrode sets R2 and R3 and chamber walls with clean water over the installed rotating shower 44, while the water from rinsing is released into the separation tank 50.

Gravitational sedimentation process begins in the separation tank 50, i.e. sedimentation of the previously treated water in the duration of T₅ = 120 min in order for the collected sediment to sediment on the bottom.

Treated water 57 above the sediment after the expiration of designed time is released into the conditioning tank 61 where intensive destruction of organic matter and ammonia takes place by simultaneous action of ozone 13 dozed from the ozone generator 12 (Q = 10 L/min) and UV radiation in the duration of T₆ =30 minutes. Destruction of organic matter and ammonia is conducted with reactive oxidative products (hydroxyl and peroxyl radicals, superoxide) generated by photolysis of ozone where hydrogen peroxide is created, and additional reactions of hydrogen peroxide and UV radiation, as well as ozone and hydrogen peroxide

Treated water after oxidation runs into the spillway tank 30 for clean water from where it is discharged into the recipient over the flow meter or is released into the reception tank to be reused as technical water. During the discharge, sample of treated water was taken for analysis and the results have been presented in Table 7.

As it may be seen from the Table 7 combination of electrochemical treatment and oxidation with ozone/UV radiation achieved colourless and odourless treated water of values of all the measured parameters in conformity with the limit values for discharge into the environment. After the final treatment, COD removal was achieved in range of 74.92% to 94.17%, colour from 98.79% to 99.68%, turbidity from 98.40% to 99.31% and ammonia from 99.63% to 99.65%.

Basic parameters of leachate treatment process from example 4 with combination of electrochemical methods and ozone and UV radiation oxidation are given in Table 8.

**Table 7. Values of parameters in leachate from three landfills prior and after electrochemical treatment in combination with oxidation, and limit values of parameters as per the Ordinance on emission limit values wastewater discharges (OG 87/10).**

| Parameter | Piškornica | | Mraclinska Dubrava | | Viševac | | LV* |
|---|---|---|---|---|---|---|---|
| | Untreated | Treated | Untreated | Treated | Untreated | Treated | |
| Colour (PtCo) | **5600** | **18** | **3960** | 171 | **1270** | 63 | n/a |
| Turbidity (NTU) | **1550** | **4** | **250** | 12 | **130** | 3 | **n/a** |
| ST (mg/L) | **576** | **4** | **171** | 14 | **90** | 6 | 35 |
| pH | 7.33 | 8.74 | 7.47 | 11.88 | **8.18** | 12.02 | 6.5-9 |
| EC (mS/cm) | 2.93 | 3.17 | 4.92 | 8.56 | 2.38 | 4.17 | - |
| TDS (mg/L) | 2050 | 2210 | 3400 | 5930 | 1660 | 2940 | - |
| KPK (mg/L) | **617** | 36 | **580** | 194 | **295** | 101 | 125 |
| NH₄-N (mg/L) | **420** | 1.5 | **200** | **87.5** | **150** | 35 | 10 |
| PO₄-P (mg/L) | **5.79** | 0.006 | 0.79 | 0.25 | 0.53 | 0.10 | 1 |
| F⁻ (mg/L) | 0.94 | 0.02 | 0.97 | 0.39 | 0.44 | 0.12 | 10 |
| Fe (mg/L) | **2.017** | 0.029 | **3.356** | 0.043 | 1.476 | 0.029 | 2 |
| Zn (mg/L) | 0.63 | 0.06 | 0.472 | 0.025 | 0.631 | 0.052 | 2 |
| Cr (mg/L) | 0.016 | n.a. | **1.037** | 0.055 | 0.038 | 0.011 | 0.5 |
| Ni (mg/L) | 0.023 | n.a. | 0.263 | 0.017 | 0.049 | 0.012 | 0.5 |
| Cu (mg/L) | 0.067 | 0.003 | 0.124 | 0.019 | 0.034 | 0.018 | 0.5 |
| Pb (mg/L) | 0.003 | n.a. | 0.008 | 0.001 | 0.048 | 0.007 | 0.5 |

| | | | | | | | |
|---|---|---|---|---|---|---|---|
| * Ordinance on emission limit values wastewater discharges (OG 87/10) | | | | | | | |

**Table 8. Basic parameters of leachate treatment process with combination of electrochemical methods and ozone and UV radiation oxidation**

| **TREATMENT PHASE** | **Parameter** | **Quantity** | **Unit of measurement** |
|---|---|---|---|
| **Water preparation tank** | | | |
| **Reactor vessel** | | | |
| | Surface P₁ | 0,6552 | m² |
| Reactor electrode set R1 | Distance d₁ | 10 | mm |
| | Time T₁ | 180 | min |
| | Voltage U₁ | 12 | V |
| | Power I₁ | 60 | A |
| | Surface P₂ | 0,6552 | m² |
| Reactor electrode set R2 | Distance d₂ | 10 | mm |
| | Time T₂ | 20 | min |
| | Voltage U₂ | 12 | V |
| | Power I₂ | 60 | A |
| Reactor electrode set R3 | Surface P₃ | 0,5688 | m² |
| | Distance d₃ | 10 | mm |
| | Time T₃ | 30 | min |
| | Voltage U₃ | 12 | V |
| | Power I₃ | 60 | A |
| | Ozone flow Q | 10 | L/min |
| Flocculation and mixing | Time T₄ | 15 | min |

| **Separation tank** | | | |
|---|---|---|---|
| Sedimentation | Time T₅ | 120 | min |

| **Conditioning vessel** | | | |
|---|---|---|---|
| Oxidation | Ozone flow Q | 10 | L/min |
| | Time T₆ | 30 | min |
| | UV | 9 | KW |

### INDUSTRIAL APPLICABILITY

Device for electrochemical treatment of industrial wastewater provides for the treatment of wastewater generated after pressure washing of boats coated with antifouling agents containing high concentrations of heavy metals, particularly of Cu, Zn and Pb, i.e. purification of other types of industrial water from metal industry, galvanization process, landfill leaching waters, winery waste waters, waste water from potato chip production, as well as for preparation of drinking water.

## Claims

1. Process for electrochemical treatment and separation of heavy metals from industrial wastewater and drinking water, consisting of following phases:
first - preparatory phase of contaminated medium by sedimentation;
second - reaction phase in the first reactor vessel (9) where contaminated medium is treated by reactor electrodes made of fixed inox plates through which passes direct current performing electrocoagulation, electrooxidation, electroflotation and disinfection of the medium by circulation of ozone and UV radiation, with simultaneous circulation and electromagnetic and ultrasonic treatment;
third - reaction phase in the second reactor vessel (28) where contaminated medium is treated by reactor electrodes made of fixed steel plates through which passes direct current, followed by passage through additional reactor electrode set made of fixed aluminium plates performing electrocoagulation, electrooxidation, electroflotation and disinfection of the medium by circulation of ozone and UV irradiation, with simultaneous circulation and electromagnetic and ultrasonic treatment;
fourth - coagulation and flocculation phase, after the conditions for their occurrence have been reached in the previous phase;
fifth - separation phase by sedimentation; and
sixth - advanced oxidation phase with simultaneous ozonation and ultraviolet irradiation treatment; or filtering phase through sand and activated carbon filters.

2. Process according to claim 1, wherein the mean concentration of heavy metals ranges from 0.1 g/L to 100 g/L.

3. Process according to claim 1, wherein the mean concentration of organic contamination ranges from 0.1 g/L to 120 g/L.

4. Process according to claim 1, wherein inorganic contaminants in contaminated medium include chromium (VI), and arsenic (III, V).

5. Process according to claim 1, wherein mixing in the first and second reactor vessels (9, 28) is performed by ozone circulation.

6. Process according to claim 1, wherein disinfection of waste water in the first and second reactor vessels (9, 28) is performed by UV lamp (16), (37) and (79) strength 9 kW in duration from 1 to 20 min.

7. Process according to claim 1, wherein mixing in the first and second reactor vessels (9, 28) is performed by compressed air circulation.

8. Process according to claim 1, wherein mixing in the first and second reactor vessels (9, 28) is performed by oxygen circulation.

9. Process according to claim 1, wherein waste water oxidation in conditioning vessel (61) is performed by UV lamp (79) strength 9 kW in duration from 1 to 20 min.

10. Process according to claim 1, wherein electrochemical phase of water treatment in the first reaction vessel (9) with reactor electrode made of fixed inox plates lasts from 5 to 180 minutes.

11. Process according to claim 1, wherein electrochemical phase of water treatment in the second reaction vessel (28) with reactor electrodes made of fixed steel plates lasts from 5 to 180 minutes.

12. Process according to claim 1, wherein electrochemical phase of water treatment in the second reaction vessel (28) with additional reactor electrode set made of fixed aluminium plates lasts from 5 to 180 minutes.

13. Device for electrochemical treatment and separation of heavy metals from industrial wastewater and drinking water, indicating that it consists of:
(a) a first water pump (2) for pumping wastewater into a water preparation tank (3);
(b) the water preparation tank (3) for preliminary sedimentation of coarser contamination from the wastewater, equipped with level-regulator (4), a second water pump (7) switchable by an exhaust electromagnetic valve (8) for pumping into a first reactor vessel (9) prepared waste water after completion of suspension phase in the water preparation tank (3), and an first electromagnetic valve (6) for discharge of collected sediment;
(c) first reactor vessel (9) for preliminary treatment of wastewater equipped with a first level-regulator (10), set of the reactor electrodes R1 made of inox (17), first suction fan (18) for air pumping into the first reactor vessel (9), first exhaust fan (19) for exhaust of generated gasses from the first reactor vessel (9), first thermocouple (20), first recirculating water pump (21) for mixing medium, first electromagnet (22), first ultrasonic unit (23), first dispersion shower (24), wherein the first recirculating water pump (21) is adapted to pump water from the bottom of the first reactor vessel (9) through the first electromagnet (22) and the first ultrasonic unit (23) to the first dispersion shower (24) on the top of the first reactor vessel (9), second electromagnetic valve (14) and a first perforated plastic pipe (15) for insertion of ozone through the first perforated plastic pipe (15) into first reactor vessel bottom, first UV lamp (16), third electromagnetic valve (31) and first shower (33) for rinsing of the first reactor vessel (9) with clean water, and a second circulating water pump (25) and fourth electromagnetic valve (26) for pumping the medium by opening the fourth electromagnetic valve (26) into a second reactor vessel (28);
(d) second reactor vessel (28) for treatment of wastewater equipped with a second level-regulator (34), set of reactor electrodes R2 made of steel (45), set of reactor electrodes R3 made of aluminium (46), second suction fan (38) for air pumping into the second reactor vessel (28), second exhaust fan (39) for exhaust of generated gasses from the second reactor vessel (28), second thermocouple (40), second recirculating water pump (41) for mixing of the medium, second electromagnet (42), second ultrasonic unit (43), second dispersion shower (44), wherein the second recirculating water pump (41) is adapted to pump water from the bottom of the second reactor vessel (28) through the second electromagnet (42) and the second ultrasonic unit (43) to the second dispersion shower (44) on the top of the second reactor vessel (28), fifth electromagnetic valve (35) and a second perforated pipe (36) for insertion of ozone through the second perforated pipe (36) into second reactor vessel bottom, second UV lamp (37), sixth electromagnetic valve (53) and second shower (54) for rinsing of the second reactor vessel (28) with clean water, and a third circulating water pump (47) for discharge of treated water (48) from the second reactor vessel (28) into first or second separator tank (50, 52), depending on their capacity to receive the treated water (48) ;
(e) ozone generator (12), ozone pump (11) for pumping ozone into bottom of first and second reactor vessel (9, 28), which provides destruction of organic matter and pathogens through ozonolysis, disinfection and mixing of water in both first and second reactor vessels (9, 28);
(f) first separator tank (50) for separation of sludge from purified water through sedimentation, equipped with third level-regulator (62), seventh electromagnetic valve (49) for insertion of medium into the first separator tank (50), eighth electromagnetic valve (65) for releasing clean water to third shower (66) for rinsing the first separator tank (50), third water pump (55) and ninth electromagnetic valve (56) for discharge of treated water, and tenth electromagnetic valve (63) for discharge of collected sediment; wherein the first separator tank (50) is adapted to be filled from the second reactor vessel (28) by the third circulating water pump (47) and through the seventh electromagnetic valve (49);
(g) second separator tank (52) for the separation of sediment from the purified water through sedimentation, equipped with level-regulator (69), eleventh electromagnetic valve (51) for insertion of medium into the second separator tank (52), twelfth electromagnetic valve (71) for the releasing of clean water to fourth shower (72) for rinsing the second separator tank (52), fourth water pump (68) and thirteenth electromagnetic valve (67) for discharge of treated water, and fourteenth electromagnetic valve (70) for discharge of collected sediment; wherein the third circulating water pump (47) is adapted to pump treated water (48) from the reactor vessel (28) into the second separator tank (52) by opening the eleventh electromagnetic valve (51);
(h) conditioning vessel (61) equipped with a fifth level-regulator (76), fifteenth electromagnetic valve (60) for insertion of medium into the conditioning vessel (61), second suction fan (80) for suction of generated gasses from the conditioning vessel (61), sixteenth electromagnetic valve (77) and a third perforated pipe (78) for insertion of ozone through the third perforated pipe (78) to conditioning vessel bottom, third UV lamp (79), fifth water pump (81) and seventeenth electromagnetic valve (82) for discharge of treated water;
(i) filter vessel (59) for filtering purified water consisting of sand filter (73), and activated carbon filters (74);
wherein after the sedimentation process in the first separator tank (50), the third water pump (55) is adapted to be turned on and the ninth electromagnetic valve (56) is adapted to be opened for releasing the treated water (57) from an upper part of the first separator tank (50) either over the eighteenth electromagnetic valve (58) into the filtering vessel (59) for filtering or over the fifteenth electromagnetic valve (60) into the conditioning vessel (61);
wherein after completion of sedimentation, the thirteenth electromagnetic valve (67) is adapted to be opend and the fourth water pump (68) is adapted to be turned on, so the treated water (57) from upper part of the second separator tank (52) leaves either over the eighteenth electromagnetic valve (58) into the filter vessel (59) for filtering, or through the fifteenth electromagnetic valve (60) into the conditioning vessel (61);
(j) spillway tank (30) for reception of clean water equipped with a submerged water pump (29) for supply of clean water for the rinsing of the first and second reactor vessels (9, 28) and first and second separator tanks (50, 52) by first, second, third and fourth showers (33, 54, 66, 72), and an exhaust valve (75) for sampling of the treated water; wherein the spillway tank (30) is adapted to be filled with treated water (32) directly from the filter vessel (59) or from the conditioning vessel (61) by the fifth water pump (81) through the seventieth electromagnetic valve (82);
(k) supply and control system consisting of solar panel (84), charge regulator (85), battery (86), frequency DC-AC converter (87) and programmable PLC controller (83) adapted to run complete operation of the device.

14. Device according to claim 13, wherein direct current is suppliable to all reactor plates alternatingly from one plate to the other.

15. Device according to claim 13, wherein direct current in the same treatment phase in the reactor vessel is suppliable parallel to both steel and aluminium reactor electrode set.

16. Device according to claim 13, wherein UV lamps (16), (37) and (79) are in direct contact with working medium, i.e. are submerged into the wastewater.

## Patentansprüche

1. Verfahren zur elektrochemischen Behandlung und Trennung von Schwermetallen von industriellem Abwasser und Trinkwasser, bestehend aus den folgenden Phasen:
erste - Vorbereitungsphase eines kontaminiertem Mediums durch Sedimentation;
zweite - Reaktionsphase in dem ersten Reaktorbehälter (9), wo das kontaminierte Medium durch Reaktorelektroden aus fixierten Inox-Platten behandelt wird, durch die Gleichstrom hindurchgeht, der eine Elektrokoagulation, Elektrooxidation, Elektroflotation und Desinfektion des Mediums durch Zirkulation von Ozon und UV-Strahlung, bei gleichzeitiger Zirkulation und elektromagnetischer und Ultraschall-Behandlung, durchführt;
dritte - Reaktionsphase in dem zweiten Reaktorbehälter (28), wo das kontaminierte Medium durch Reaktorelektroden aus fixierten Stahlplatten behandelt wird, durch die Gleichstrom hindurchgeht, gefolgt von einem Durchgang durch einen zusätzlichen Reaktorelektrodensatz aus fixierten Aluminiumplatten, der eine Elektrokoagulation, Elektrooxidation, Elektroflotation und Desinfektion des Mediums durch Zirkulation von Ozon und UV-Strahlung, bei gleichzeitiger Zirkulation und elektromagnetischer und Ultraschall-Behandlung, durchführt;
vierte - Koagulations- und Flokkulationsphase, nachdem die Bedingungen für ihr Eintreten in der vorherigen Phase erreicht worden sind;
fünfte - Trennungsphase durch Sedimentation; und
sechste - fortgeschrittene Oxidationsphase mit gleichzeitiger Ozonisierung und UV-Strahlungsbehandlung; oder Filterungsphase durch Sand und Aktivkohlefilter.

2. Verfahren nach Anspruch 1, wobei die mittlere Konzentration von Schwermetallen von 0,1 g/L bis 100 g/L reicht.

3. Verfahren nach Anspruch 1, wobei die mittlere Konzentration organischer Kontamination von 0,1 g/L bis 120 g/L reicht.

4. Verfahren nach Anspruch 1, wobei anorganische Kontaminationsstoffe im kontaminierten Medium Chrom (VI) und Arsen (III, V) umfassen.

5. Verfahren nach Anspruch 1, wobei ein Mischen in dem ersten und dem zweiten Reaktorbehälter (9, 28) durch Ozonzirkulation durchgeführt wird.

6. Verfahren nach Anspruch 1, wobei die Desinfektion von Abwasser in dem ersten und dem zweiten Reaktorbehälter (9, 28) durch eine UV-Lampe (16), (37) und (79) mit einer Stärke von 9 kW über eine Dauer von 1 bis 20 min durchgeführt wird.

7. Verfahren nach Anspruch 1, wobei ein Mischen in dem ersten und dem zweiten Reaktorbehälter (9, 28) durch Druckluftzirkulation durchgeführt wird.

8. Verfahren nach Anspruch 1, wobei ein Mischen in dem ersten und dem zweiten Reaktorbehälter (9, 28) durch Sauerstoffzirkulation durchgeführt wird.

9. Verfahren nach Anspruch 1, wobei die Abwasseroxidation in einem Konditionierungsbehälter (61) durch eine UV-Lampe (79) mit einer Stärke von 9 kW über eine Dauer von 1 bis 20 min durchgeführt wird.

10. Verfahren nach Anspruch 1, wobei die elektrochemische Phase der Wasserbehandlung in dem ersten Reaktionsbehälter (9) mit einer Reaktorelektrode aus fixierten Inoxplatten von 5 bis 180 Minuten dauert.

11. Verfahren nach Anspruch 1, wobei die elektrochemische Phase der Wasserbehandlung in dem zweiten Reaktionsbehälter (28) mit Reaktorelektroden aus fixierten Stahlplatten von 5 bis 180 Minuten dauert.

12. Verfahren nach Anspruch 1, wobei die elektrochemische Phase der Wasserbehandlung in dem zweiten Reaktionsbehälter (28) mit einem zusätzlichen Reaktorelektrodensatz aus fixierten Aluminiumplatten von 5 bis 180 Minuten dauert.

13. Vorrichtung zur elektrochemischen Behandlung und Trennung von Schwermetallen von industriellem Abwasser und Trinkwasser, für die angegeben wird, dass sie besteht aus:
(a) einer ersten Wasserpumpe (2) zum Pumpen von Abwasser in einen Wasservorbereitungstank (3);
(b) dem Wasservorbereitungstank (3) zur vorläufigen Sedimentation einer gröberen Kontamination von dem Abwasser, der mit einem Pegelregler (4), einer zweiten Wasserpumpe (7), die durch ein elektromagnetisches Auslassventil schaltbar ist, um vorbereitetes Abwasser nach Fertigstellung einer Suspensionsphase in dem Wasservorbereitungstank (3) in einen ersten Reaktorbehälter (9) zu pumpen, und einem ersten elektromagnetischen Ventil (6) zum Abführen eines gesammelten Sediments ausgestattet ist;
(c) einem ersten Reaktorbehälter (9) zur vorläufigen Behandlung von Abwasser, der mit einem ersten Pegelregler (10), einem Satz von Reaktorelektroden RI aus Inox (17), einem ersten Sauggebläse (18) zum Pumpen von Luft in den ersten Reaktorbehälter (9), einem ersten Auslassgebläse (19) zum Auslassen von erzeugten Gasen aus dem ersten Reaktorbehälter (9), einem ersten Thermoelement (20), einer ersten rezirkulierenden Wasserpumpe (21) zum Mischen eines Mediums, einem ersten Elektromagneten (22), einer ersten Ultraschalleinheit (23), einer ersten Dispersionsdusche (24), wobei die erste rezirkulierende Wasserpumpe (21) daran angepasst ist, Wasser von dem Boden des ersten Reaktorbehälters (9) durch den ersten Elektromagneten (22) und die erste Ultraschalleinheit (23) zu der ersten Dispersionsdusche (24) oben auf dem ersten Reaktorbehälter (9) zu pumpen, einem zweiten elektromagnetischen Ventil (14) und einem ersten perforierten Kunststoffrohr (15) zum Einbringen von Ozon durch das erste perforierte Kunststoffrohr (15) in den Boden des ersten Reaktorbehälters, einer ersten UV-Lampe (16), einem dritten elektromagnetischen Ventil (31) und einer ersten Dusche (33) zum Spülen des ersten Reaktorbehälters (9) mit sauberem Wasser, und einer zweiten zirkulierenden Wasserpumpe (25) und einem vierten elektromagnetischen Ventil (26) zum Pumpen des Mediums durch Öffnen des vierten elektromagnetischen Ventils (26) in einen zweiten Reaktorbehälter (28) ausgestattet ist;
(d) dem zweiten Reaktorbehälter (28) zur Behandlung von Abwasser, der mit einem zweiten Pegelregler (34), einen Satz von Reaktorelektroden R2 aus Stahl (45), einem Satz von Reaktorelektroden R3 aus Aluminium (46), einem zweiten Sauggebläse (38) zum Pumpen von Luft in den zweiten Reaktorbehälter (28), einem zweiten Auslassgebläse (39) zum Auslassen von erzeugten Gasen aus dem zweiten Reaktorbehälter (28), einem zweiten Thermoelement (40), einer zweiten rezirkulierenden Wasserpumpe (41) zum Mischen des Mediums, einem zweiten Elektromagneten (42), einer zweiten Ultraschalleinheit (43), einer zweiten Dispersionsdusche (44), wobei die zweite rezirkulierende Wasserpumpe (41) daran angepasst ist, Wasser von dem Boden des zweiten Reaktorbehälters (28) durch den zweiten Elektromagneten (42) und die zweite Ultraschalleinheit (43) zu der zweiten Dispersionsdusche (44) oben auf dem zweiten Reaktorbehälter (28) zu pumpen, einem fünften elektromagnetischen Ventil (35) und einem zweiten perforierten Rohr (36) zum Einbringen von Ozon durch das zweite perforierte Rohr (36) in den Boden des zweiten Reaktorbehälters, einer zweiten UV-Lampe (37), einem sechsten elektromagnetischen Ventil (53) und einer zweiten Dusche (54) zum Spülen des zweiten Reaktorbehälters (28) mit sauberem Wasser, und einer dritten zirkulierenden Wasserpumpe (47) zum Abführen von behandeltem Wasser (48) von dem zweiten Reaktorbehälter (28) in einen ersten oder zweiten Trenntank (50, 52) in Abhängigkeit von ihrer Kapazität zum Aufnehmen des behandelten Wassers (48) ausgestattet ist;
(e) einem Ozongenerator (12), einer Ozonpumpe (11) zum Pumpen von Ozon in den Boden des ersten und des zweiten Reaktorbehälters (9, 28), was eine Zerstörung von organischer Materie und Pathogenen durch Ozonolyse, Desinfektion und Mischen von Wasser sowohl in dem ersten als auch in dem zweiten Reaktorbehälter (9, 28) bereitstellt;
(f) dem ersten Trenntank (50) zur Trennung von Schlamm von gereinigtem Wasser durch Sedimentation, der mit einem dritten Pegelregler (62), einem siebten elektromagnetischen Ventil (49) zum Einbringen eines Mediums in den ersten Trenntank (50), einem achten elektromagnetischen Ventil (65) zum Freigeben von sauberem Wasser zu einer dritten Dusche (66) zum Spülen des ersten Trenntanks (50), einer dritten Wasserpumpe (55) und einem neunten elektromagnetischen Ventil (56) zum Abführen von behandeltem Wasser, und einem zehnten elektromagnetischen Ventil (63) zum Abführen von gesammeltem Sediment ausgestattet ist; wobei der erste Trenntank (50) daran angepasst ist, von dem zweiten Reaktorbehälter (28) durch die dritte zirkulierende Wasserpumpe (47) und durch das siebte elektromagnetische Ventil (49) gefüllt zu werden;
(g) dem zweiten Trenntank (52) für die Trennung von Sediment von dem gereinigten Wasser durch Sedimentation, der mit einem Pegelregler (69), einem elften elektromagnetischen Venil (51) zum Einbringen eines Mediums in den zweiten Trenntank (52), einem zwölften elektromagnetischen Ventil (71) für das Freigeben von sauberem Wasser zu einer vierten Dusche (72) zum Spülen des zweiten Trenntanks (52), einer vierten Wasserpumpe (68) und einem dreizehnten elektromagnetischen Ventil (67) zum Abführen von behandeltem Wasser, und einem vierzehnten elektromagnetischen Ventil (70) zum Abführen von gesammeltem Sediment ausgestattet ist; wobei die dritte zirkulierende Wasserpumpe (47) daran angepasst ist, durch Öffnen des elften elektromagnetischen Ventils (51) behandeltes Wasser (48) von dem Reaktorbehälter (28) in den zweiten Trenntank (52) zu pumpen;
(h) einem Konditionierungsbehälter (61), der mit einem fünften Pegelregler (76), einem fünfzehnten elektromagnetischen Ventil (60) zum Einbringen eines Mediums in den Konditionierungsbehälter (61), einem zweiten Sauggebläse (80) zum Ansaugen von erzeugten Gasen von dem Konditionierungsbehälter (61), einem sechszehnten elektromagnetischen Ventil (77) und einem dritten perforierten Rohr (78) zum Einbringen von Ozon durch das dritte perforierte Rohr (78) zu dem Boden des Konditionierungsbehälters, einer dritten UV-Lampe (79), einer fünften Wasserpumpe (81) und einem siebzehnten elektromagnetischen Ventil (82) zum Abführen von behandeltem Wasser ausgestattet ist;
(i) einem Filterbehälter (59) zum Filtern von gereinigtem Wasser, der aus einem Sandfilter (73) und Aktivkohlefiltern (74) besteht;
wobei nach dem Sedimentationsprozess in dem ersten Trenntank (50) die dritte Wasserpumpe (55) daran angepasst ist, eingeschaltet zu werden, und das neunte elektromagnetische Ventil (56) daran angepasst ist, geöffnet zu werden, um das behandelte Wasser (57) von einem oberen Teil des ersten Trenntanks (50) entweder über das achtzehnte elektromagnetische Ventil (58) in den Filterungsbehälter (59) zum Filtern oder über das fünfzehnte elektromagnetische Ventil (60) in den Konditionierungsbehälter (61) freizugeben;
wobei nach Fertigstellung der Sedimentation das dreizehnte elektromagnetische Ventil (67) daran angepasst ist, geöffnet zu werden, und die vierte Wasserpumpe (68) daran angepasst ist, eingeschaltet zu werden, so dass das behandelte Wasser (57) von dem oberen Teil des zweiten Trenntanks (52) entweder über das achtzehnte elektromagnetische Ventil (58) in den Filterbehälter (59) zum Filtern oder durch das fünfzehnte elektromagnetische Ventil (60) in den Konditionierungsbehälter (61) austritt;
(j) einem Überlauftank (30) zur Aufnahme von sauberem Wasser, der mit einer Tauchwasserpumpe (29) zum Zuführen von sauberem Wasser zum Spülen des ersten und des zweiten Reaktorbehälters (9, 28) und des ersten und des zweiten Trenntanks (50, 52) durch die erste, die zweite, die dritte und die vierte Dusche (33, 54, 66, 72) und einem Auslassventil (75) zur Probeentnahme des behandelten Wassers ausgestattet ist; wobei der Überlauftank (30) daran angepasst ist, durch die fünfte Wasserpumpe (81) durch das siebzehnte elektromagnetische Ventil (82) mit behandeltemWasser (32) direkt von dem Filterbehälter (59) oder von dem Konditionierungsbehälter (61) gefüllt zu werden;
(k) einem Zuführungs- und Steuerungssystem, das aus einem Solarpanel (84), einem Laderegler (85), einer Batterie (86), einem Frequenz-DC/AC-Wandler (87) und einem programmierbaren PLC-Controller (83) besteht, der daran angepasst ist, den kompletten Betrieb der Vorrichtung auszuführen.

14. Vorrichtung nach Anspruch 13, wobei allen Reaktorplatten abwechselnd von einer Platte zur nächsten Gleichstrom zuführbar ist.

15. Vorichtung nach Anspruch 13, wobei in der gleichen Behandlungsphase in dem Reaktorbehälter Gleichstrom parallel sowohl zu dem Stahl- als auch dem Aluminiumreaktorelektrodensatz zuführbar ist.

16. Vorrichtung nach Anspruch 13, wobei die UV-Lampen (16), (37) und (79) in direktem Kontakt mit dem Arbeitsmedium sind, d.h. in das Abwasser getaucht sind.

## Revendications

1. Procédé de traitement et de séparation électrochimique de métaux lourds d'eaux usées industrielles et d'eaux de boisson, constitué des phases suivantes :
premièrement - phase préparatoire de milieu contaminé par sédimentation ;
deuxièmement - phase réactionnelle dans le premier récipient réactionnel (9) où le milieu contaminé est traité par des électrodes de réacteur constituées de plaques en inox fixes à travers lesquelles passe un courant direct exécutant l'électrocoagulation, l'électro-oxydation, l'électroflottaison et la désinfection du milieu par circulation d'ozone et rayonnement UV, avec la circulation et le traitement électromagnétique et aux ultrasons simultanés ;
troisièmement - phase réactionnelle dans le second récipient réactionnel (28) où le milieu contaminé est traité par des électrodes de réacteur constituées de plaques en acier fixes à travers lesquelles passe un courant direct, suivi du passage à travers un ensemble d'électrodes de réacteur additionnel constituées de plaques en aluminium fixes exécutant l'électrocoagulation, l'électro-oxydation, l'électroflottaison et la désinfection du milieu par circulation d'ozone et rayonnement UV, avec la circulation et le traitement électromagnétique et aux ultrasons simultanés ;
quatrièmement - phase de coagulation et de floculation, après que les conditions pour leur apparition aient été atteintes dans la phase précédente ;
cinquièmement - phase de séparation par sédimentation ; et
sixièmement - phase d'oxydation avancée avec ozonation et traitement d'exposition à un rayonnement ultraviolet simultanés ; ou phase de filtration à travers du sable et des filtres à charbon actif.

2. Procédé selon la revendication 1, la concentration moyenne des métaux lourds s'étendant de 0,1 g/l à 100 g/l.

3. Procédé selon la revendication 1, la concentration moyenne de la contamination organique s'étendant de 0,1 g/l à 120 g/l.

4. Procédé selon la revendication 1, les contaminants inorganiques dans le milieu contaminé comprenant du chrome (VI), et de l'arsenic (III, V).

5. Procédé selon la revendication 1, le mélange dans le premier et le second récipient réactionnel (9, 28) étant exécuté par circulation d'ozone.

6. Procédé selon la revendication 1, la désinfection des eaux usées dans le premier et le second récipient réactionnel (9, 28) étant exécutée par lampe UV (16), (37) et (79) d'une puissance de 9 kW sur une durée de 1 à 20 min.

7. Procédé selon la revendication 1, le mélange dans le premier et le second récipient réactionnel (9, 28) étant exécuté par circulation d'air comprimé.

8. Procédé selon la revendication 1, le mélange dans le premier et le second récipient réactionnel (9, 28) étant exécuté par circulation d'oxygène.

9. Procédé selon la revendication 1, l'oxydation des eaux usées dans le récipient de conditionnement (61) étant exécutée par lampe UV (79) d'une puissance de 9 kW sur une durée de 1 à 20 min.

10. Procédé selon la revendication 1, la phase électrochimique du traitement de l'eau dans le premier récipient réactionnel (9) avec une électrode de réacteur constituée de plaques en inox fixes durant de 5 à 180 minutes.

11. Procédé selon la revendication 1, la phase électrochimique du traitement de l'eau dans le second récipient réactionnel (28) avec les électrodes de réacteur constituées de plaques en acier fixes durant de 5 à 180 minutes.

12. Procédé selon la revendication 1, la phase électrochimique du traitement de l'eau dans le second récipient réactionnel (28) avec un ensemble d'électrodes de réacteur additionnel constituées de plaques en aluminium fixes durant de 5 à 180 minutes.

13. Dispositif de traitement et de séparation électrochimique des métaux lourds d'eaux usées industrielles et d'eaux de boisson, indiquant qu'il est constitué :
(a) d'une première pompe à eau (2) pour pomper les eaux usées dans une cuve de préparation d'eau (3) ;
(b) de la cuve de préparation d'eau (3) pour la sédimentation préliminaire de contamination la plus grossière depuis les eaux usées, équipée d'un régulateur de niveau (4), d'une seconde pompe à eau (7) pouvant être commutée par une vanne électromagnétique d'échappement (8) pour le pompage dans un premier récipient réactionnel (9) des eaux usées préparées après l'achèvement de la phase de mise en suspension dans la cuve de préparation d'eau (3), et d'une première vanne électromagnétique (6) pour évacuer les sédiments recueillis ;
(c) du premier récipient réactionnel (9) pour le traitement préliminaire des eaux usées muni d'un premier régulateur de niveau (10), de l'ensemble des électrodes de réacteur R1 en inox (17), d'un premier ventilateur d'aspiration (18) pour pomper l'air dans le premier récipient réactionnel (9), d'un premier ventilateur d'évacuation (19) pour évacuer les gaz générés du premier récipient réactionnel (9), d'un premier thermocouple (20), d'une première pompe à eau de recirculation (21) pour le mélange du milieu, d'un premier électro-aimant (22), d'une première unité ultrasonore (23), d'une première douche de dispersion (24), la première pompe à eau de recirculation (21) étant adaptée pour pomper l'eau depuis le fond du premier récipient réactionnel (9) à travers le premier électro-aimant (22) et la première unité ultrasonore (23) vers la première douche de dispersion (24) sur le dessus du premier récipient réactionnel (9), d'une seconde vanne électromagnétique (14) et d'une première conduite en plastique perforée (15) pour l'insertion d'ozone à travers la première conduite en plastique perforée (15) dans le fond du premier récipient réactionnel, d'une première lampe UV (16), d'une troisième vanne électromagnétique (31) et d'une première douche (33) pour rincer le premier récipient réactionnel (9) avec de l'eau propre, et d'une seconde pompe à eau de circulation (25) et d'une quatrième vanne électromagnétique (26) pour pomper le milieu par ouverture de la quatrième vanne électromagnétique (26) dans un second récipient réactionnel (28) ;
(d) d'un second récipient réactionnel (28) pour le traitement des eaux usées muni d'un second régulateur de niveau (34), d'un ensemble d'électrodes de réacteur R2 en acier (45), d'un ensemble d'électrodes de réacteur R3 en aluminium (46), d'un second ventilateur d'aspiration (38) pour pomper l'air dans le second récipient réactionnel (28), d'un second ventilateur d'évacuation (39) pour évacuer les gaz générés du second récipient réactionnel (28), d'un second thermocouple (40), d'une seconde pompe à eau de recirculation (41) pour le mélange du milieu, d'un second électro-aimant (42), d'une seconde unité ultrasonore (43), d'une seconde douche de dispersion (44), la seconde pompe à eau de recirculation (41) étant adaptée pour pomper l'eau depuis le fond du second récipient réactionnel (28) à travers le second électro-aimant (42) et la seconde unité ultrasonore (43) vers la seconde douche de dispersion (44) sur le dessus du second récipient réactionnel (28), d'une cinquième vanne électromagnétique (35) et d'une seconde conduite perforée (36) pour l'insertion d'ozone à travers la seconde conduite perforée (36) dans le fond du second récipient réactionnel, d'une seconde lampe UV (37), d'une sixième vanne électromagnétique (53) et d'une seconde douche (54) pour rincer le second récipient réactionnel (28) avec de l'eau propre, et d'une troisième pompe à eau de circulation (47) pour évacuer l'eau traitée (48) depuis le second récipient réactionnel (28) dans la première ou la seconde cuve séparatrice (50, 52), en fonction de leur capacité à recevoir l'eau traitée (48) ;
(e) d'un générateur d'ozone (12), d'une pompe d'ozone (11) pour pomper de l'ozone dans le fond du premier et du second récipient réactionnel (9, 28), qui fournit la destruction des matières organiques et des agents pathogènes par ozonolyse, la désinfection et le mélange de l'eau dans à la fois le premier et le second récipient réactionnel (9, 28) ;
(f) d'une première cuve séparatrice (50) pour la séparation des boues de l'eau purifiée par sédimentation, munie d'un troisième régulateur de niveau (62), d'une septième vanne électromagnétique (49) pour l'insertion de milieu dans la première cuve séparatrice (50), d'une huitième vanne électromagnétique (65) pour libérer l'eau propre vers la troisième douche (66) pour rincer la première cuve séparatrice (50), d'une troisième pompe à eau (55) et d'une neuvième vanne électromagnétique (56) pour évacuer l'eau traitée, et d'une dixième vanne électromagnétique (63) pour évacuer les sédiments recueillis ; la première cuve séparatrice (50) étant adaptée pour être remplie du second récipient réactionnel (28) par la troisième pompe à eau de circulation (47) et à travers la septième vanne électromagnétique (49) ;
(g) d'une seconde cuve séparatrice (52) pour la séparation des sédiments de l'eau purifiée par sédimentation, munie d'un régulateur de niveau (69), d'une onzième vanne électromagnétique (51) pour l'insertion de milieu dans la seconde cuve séparatrice (52), d'une douzième vanne électromagnétique (71) pour la libération de l'eau propre vers la quatrième douche (72) pour rincer la seconde cuve séparatrice (52), d'une quatrième pompe à eau (68) et d'une treizième vanne électromagnétique (67) pour évacuer l'eau traitée, et d'une quatorzième vanne électromagnétique (70) pour évacuer les sédiments recueillis ; la troisième pompe à eau de circulation (47) étant adaptée pour pomper l'eau traitée (48) depuis le récipient réactionnel (28) dans la seconde cuve séparatrice (52) par l'ouverture de la onzième vanne électromagnétique (51) ;
(h) d'un récipient de conditionnement (61) muni d'un cinquième régulateur de niveau (76), d'une quinzième vanne électromagnétique (60) pour l'insertion de milieu dans le récipient de conditionnement (61), d'un second ventilateur d'aspiration (80) pour aspirer les gaz générés du récipient de conditionnement (61), d'une seizième vanne électromagnétique (77) et d'une troisième conduite perforée (78) pour l'insertion d'ozone à travers la troisième conduite perforée (78) vers le fond du récipient de conditionnement, d'une troisième lampe UV (79), d'une cinquième pompe à eau (81) et d'une dix-septième vanne électromagnétique (82) pour l'évacuation de l'eau traitée ;
(i) d'un récipient de filtration (59) pour filtrer l'eau purifiée constitué du filtre à sable (73), et des filtres à charbon actif (74) ;
où après le procédé de sédimentation dans la première cuve séparatrice (50), la troisième pompe à eau (55) étant adaptée pour être mise en marche et la neuvième vanne électromagnétique (56) étant adaptée pour être ouverte pour libérer l'eau traitée (57) depuis une partie supérieure de la première cuve séparatrice (50) soit au-dessus de la dix-huitième vanne électromagnétique (58) dans le récipient de filtration (59) pour la filtration soit par-dessus la quinzième vanne électromagnétique (60) dans le récipient de conditionnement (61) ;
où après l'achèvement de la sédimentation, la treizième vanne électromagnétique (67) est adaptée pour être ouverte et la quatrième pompe à eau (68) est adaptée pour être mise en marche, de sorte que l'eau traitée (57) depuis la partie supérieure de la seconde cuve séparatrice (52) parte soit par-dessus la dix-huitième vanne électromagnétique (58) dans le récipient de filtration (59) pour la filtration, soit à travers la quinzième vanne électromagnétique (60) dans le récipient de conditionnement (61) ;
(j) d'une cuve de déversement (30) pour la réception de l'eau propre munie d'une pompe à eau submergée (29) pour l'alimentation d'eau propre pour le rinçage du premier et du second récipient réactionnel (9, 28) et de la première et de la seconde cuve séparatrice (50, 52) par la première, la seconde, la troisième et la quatrième douche (33, 54, 66, 72), et une vanne d'échappement (75) pour l'échantillonnage de l'eau traitée ; la cuve de déversement (30) étant adaptée pour être remplie avec l'eau traitée (32) directement depuis le récipient de filtration (59) ou depuis le récipient de conditionnement (61) par la cinquième pompe à eau (81) à travers la dix-septième vanne électromagnétique (82) ;
(k) d'un système d'alimentation et de commande constitué de panneau solaire (84), de régulateur de charge (85), de batterie (86), de convertisseur de fréquence AC-DC (87) et de dispositif programmable de commande PLC (83) adapté pour effectuer le fonctionnement complet du dispositif.

14. Dispositif selon la revendication 13, le courant direct pouvant être alimenté à toutes les plaques de réacteur alternativement d'une plaque à l'autre.

15. Dispositif selon la revendication 13, le courant direct dans la même phase de traitement dans le récipient réactionnel pouvant être alimenté parallèle à la fois à l'ensemble des électrodes de réacteur en acier et en aluminium.

16. Dispositif selon la revendication 13, les lampes UV (16), (37) et (79) se trouvant en contact direct avec le milieu de travail, c'est-à-dire étant submergées dans les eaux usées.
